(19) **Europäisches Patentamt**
**European Patent Office**
**Office européen des brevets**

(11) **EP 1 538 576 B1**

(12) **EUROPEAN PATENT SPECIFICATION**

(45) Date of publication and mention
of the grant of the patent:
**21.05.2008 Bulletin 2008/21**

(51) Int Cl.:
*G07F 17/32* *(2006.01)*

(21) Application number: **04106260.5**

(22) Date of filing: **03.12.2004**

(54) **Method and apparatus for dice eye number determination**

Verfahren und Vorrichtung zur Ermittlung der Punktenzahl eines Würfels

Méthode et dispositif de détermination du nombre de points sur un dé

(84) Designated Contracting States:
**DE FR GB NL**

(30) Priority: **04.12.2003 JP 2003406539**

(43) Date of publication of application:
**08.06.2005 Bulletin 2005/23**

(73) Proprietor: **HUDSON SOFT CO., LTD.**
**Sapporo-shi,**
**Hokkaido (JP)**

(72) Inventors:
• **Itagaki, Fumihiko**
**Toyohira-ku**
**Sapporo-shi**
**Hokkaido (JP)**
• **Murakami, Satoshi**
**Toyohira-ku**
**Sapporo-shi**
**Hokkaido (JP)**

(74) Representative: **Brunner, Michael John et al**
**Gill Jennings & Every LLP**
**Broadgate House**
**7 Eldon Street**
**London EC2M 7LH (GB)**

(56) References cited:
**US-A- 4 892 311**    **US-B1- 6 609 710**

• **B. CORREIA, J. A. SILVA ET AL.: "Automated detection and classification of dice" MACHINE VISION APPLICATIONS IN INDUSTRIAL INSPECTION III 8-9 FEB, vol. 2423, March 1995 (1995-03), pages 196-202, XP002340768 ISSN: 0277-786X**
• **I. LAPANJA, M. MRAZ, N. ZIMIC: "Computer vision based reliability control for electromechanical dice gambling machine" PROC IEEE INT CONF IND TECHNOL; PROCEEDINGS OF THE IEEE INTERNATIONAL CONFERENCE ON INDUSTRIAL TECHNOLOGY 2000 IEEE, vol. 2, January 2000 (2000-01), pages 325-328, XP002340779 PISCATAWAY, NJ, USA**
• **PATENT ABSTRACTS OF JAPAN vol. 013, no. 501 (C-652), 10 November 1989 (1989-11-10) & JP 01 198576 A (TAITO CORP), 10 August 1989 (1989-08-10)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present application is based on Japanese patent application No. 2003 - 406539, the entire contents of which are incorporated herein by reference.

**BACKGROUND OF THE INVENTION**

Field of the Invention

The present invention relates to a dice eye number determination method, a dice eye number determination apparatus, and an electronic apparatus using the same, and in particular to a dice eye number determination method, a dice eye number determination apparatus, and an electronic apparatus using the same, which can use a dice available in the market, as well as can determine in image recognition eye numbers on a plurality of dice used at a time.

Background Information

For example, a sugoroku game requires a dice as a tool to play the game. And some of home video game machines, board games or the like require a dice. Conventionally determination of an eye number on a cast dice is performed by visual observation of game participants.

However, in games such as electronic game personal machines or electronic personal computers, almost all of game contents, game progresses, win-loss records and the like are displayed on an image display and these games are performed by operating a controller or a keyboard. In case a player who is familiar with games such as the game personal machines or the personal computers play a conventional sugoroku game, the player is not familiar with an old-fashioned game method in which a player rolls a dice with the player's hand and the eye number on the dice is visually determined by the player. On the other hand, the elderly are difficult to become familiar with a purely electronic game in which a game is performed by an operation of a controller.

And there is a case where a dice is used in anything other than a game. For example, in an arithmetic lesson in school, a math problem is set using a dice as a teaching tool. Since the dice is small, it is thought that students can not visualize a state of the dice, such as an eye number and an eye color clearly which causes weakening recognition of participation in lessons and reducing the interest in lessons by half.

Therefore, Japanese Unexamined Patent Publication No. 08 - 215423 has disclosed a dice eye recognition apparatus that can electronically determine the number of eyes on a dice. In the apparatus, a magnetic piece is housed in each face of the numbers 1 - 6, a magnet generated in the magnetic piece is detected by a magnetic sensor, and a detection signal by scanning is processed in a process control circuit, thereby to determine the number of eyes on the dice.

However, according to the conventional apparatus of determining the number of eyes on the dice, since a special dice that houses a magnetic piece therein is necessary to use, a dice commercially sold in a toy store or the like can not be used. And in a game using a dice the number of dice is not limited to one, but there is a case a plurality of dice may be used. In this case there is no problem if all dice have the same size, the same specification (color, size and shape of eyes, and the like) . However, in a case where not all dice have the same in the above aspects, it becomes difficult to confirm the number of eyes. Therefore, a conventional apparatus which can determine the number of eyes on a dice available in the market are not provided yet.

In view of the above, there exists a need for a dice eye number determination apparatus, a dice eye number determination method, and an electronic apparatus using the same which overcome the above-mentioned problems in the related art. The present invention addresses this need in the related art and also other needs, which will become apparent to those skilled in the art from this disclosure.

It is an object of the present invention to a dice eye number determination method, a dice eye number determination apparatus, and an electronic apparatus using the same, which can use a dice available in the market, as well as can determine the number of eyes even if a plurality of dice are used at a time.

B. CORREIA, J. A. SILVA ET AL: "Automated detection and classification of dice" MACHINE VISION APPLICATIONS IN INDUSTRIAL INSPECTION III 8-9 FEB, vol. 2423, March 1995 (1995-03), pages 196-202 describes a die eye number determination method, comprising the steps of:

> providing a plurality of dice, each die having at least six faces and describing from one eye to at least six eyes on each of at least the six faces of the die;
> capturing an image of one of the six faces being at least one of an upper face or a lower face of the plurality of dice to generate an image signal; and
> determining an eye number of each die based upon the image signal on a condition of at least one of a feature of the eye(s) on the captured face, a number, and a location relation of the eye(s) in a predetermined area of the captured face.

The present invention is characterised by determining two eyes in the captured image that have the longest distance therebetween as the eyes that are positioned at the outermost ends in the captured image; executing processing of determining an eye number by setting one of the eyes positioned at the outermost ends of the captured image as an unprocessed end eye; repeating the processing of determining the eye number by setting an eye positioned close to the unprocessed end eye as a next unprocessed end eye in order, until all eyes in the captured image are processed; and the processing of determining an eye number determines first (S101) if the unprocessed end eye has a feature corresponding to a number "1"; thereafter if the unprocessed end eye does not have the feature of the eye corresponding to the number "1", it is determined whether or not the unprocessed end eye has the feature of the eyes corresponding to a number "6" based on a clearance between the unprocessed end eye with other eyes and subsequently, in order, to a feature of a smaller number of eyes.

According to the method, since the image signal is generated by shooting at least the one face of the dice, and the eye number is determined by at least the one of the feature, the number, and the location relation of the eyes as a determination condition, the eye number on the dice available in the market can be determined in image recognition.

According to a second aspect of the present invention there is provide a die eye number determination apparatus, comprising:

an image-capturing section to capture one or a plurality of eyes described on an upper face or a lower face on a plurality of dice, for outputting an image information;
a vessel, wherein:

a space for rolling the at least the one die is formed and the image-capturing section is located in a lower part or an upper part thereof;
a determination section arranged to determine an eye number based upon the image information by the image-capturing section on a condition of at least one of a feature of the eye(s) on the captured face, a number, and a location relation of the eye(s) in a predetermined area of the captured face; and
an output section arranged to display visually or by sound a determination result of the determination section as a numerical value or output the determination result as die information of an electronic game; and characterised in that the determination section is configured to:

determine two eyes in the captured image that have the longest distance therebetween as the eyes that are positioned at the outermost ends in the captured image;
execute processing of determining an eye number by setting one of the eyes positioned at the outermost ends of the captured image as an unprocessed end eye;
repeat the processing of determining the eye number by setting an eye positioned close to the unprocessed end eye as a next unprocessed end eye in order, until all eyes in the captured image are processed; and
determine first if the unprocessed end eye has a feature corresponding to a number "1";
thereafter the determination section determines when the unprocessed end eye does not have the feature of the eye corresponding to the number "1", whether or not the unprocessed end eye has the feature of the eyes corresponding to a number "6" based on a clearance between the unprocessed end eye with the other eyes and subsequently, in order, to a feature of a smaller number of eyes.

According to the apparatus, the eyes described on the lower face or the upper face of the dice rolled inside the vessel are shot by the image-shooting section and the eye number is determined by the determination section based upon at least one of the feature, the number, and the location relation of the eyes that are set as a determination condition, as well as the determination result is displayed and voiced, and is outputted as dice information. Thereby even if the dice available in the market are used, the eye number can be determined in image recognition.

## BRIEF DESCRIPTION OF THE DRAWINGS

Referring now to the attached drawings which form a part of this original disclosure:

FIG. 1 is a block diagram showing a constitution of an eye number determination apparatus for a dice in a first preferred embodiment;
FIG. 2 is a frame constitution view showing another example of an image-shooting section;

FIG. 3 is a frame constitution view showing a different example of an image-shooting section;

FIG. 4 is a flow chart showing an entire processing of an eye number determination method for a dice in the first preferred embodiment according to the present invention;

FIG. 5 is an explanation view showing how each of the eye number "1" - "6" of the dice appears;

FIG. 6 is a flow chart showing a detailed processing in S101 in FIG. 4;

FIG. 7 is a flow chart showing a detailed processing in S102 in FIG. 4;

FIG. 8A is an explanation view showing detailed location of each eye of the eye number "6" on the dice;

FIG. 8B is an explanation view showing detailed location of each eye of the eye number "6" on the dice;

FIG. 8C is an explanation view showing detailed location of each eye of the eye number "3" on the dice;

FIG. 8D is an explanation view showing detailed location of each eye of the eye number "6" on the dice;

FIG. 9 is a flow chart showing a detailed processing in S103 in FIG. 4;

FIG. 10 is an explanation view showing detailed location of each eye of the eye number "5" on the dice;

FIG. 11 is an explanation view showing a state where three dice of the eye numbers "2", "2", and "4" are put together to falsely form the eye number "5";

FIG. 12 is a flow chart showing a detailed processing in S104 in FIG. 4;

FIG. 13 is an explanation view showing a state where a plurality of dice are put together to form the eye number "4";

FIG. 14 is an explanation view showing an eye location in an eye pattern of the eye number "4" on the dice;

FIG. 15 is an explanation view showing a state where three dice, each having the eye number "2", are put together to form the eye number "4";

FIG. 16 is a flow chart showing a detailed processing in S105 in FIG. 4;

FIG. 17 is an explanation view showing an eye location in an eye pattern of the eye number "3" on the dice;

FIG. 18 is an explanation view showing a state where two dice, are put together to form the eye number "3" in a contacting part;

FIG. 19 is an explanation view showing an example where in case two dice are put together, the eye number "2" or "3" is formed depending on their location relation;

FIG. 20 is a flow chart showing a detailed processing in S106 in FIG. 4; and

FIG. 21 is a block diagram showing an electronic apparatus in a second preferred embodiment according to the present invention.

## DETAILED DESCRIPTION OF THE PREFERRED EMBODIMENTS

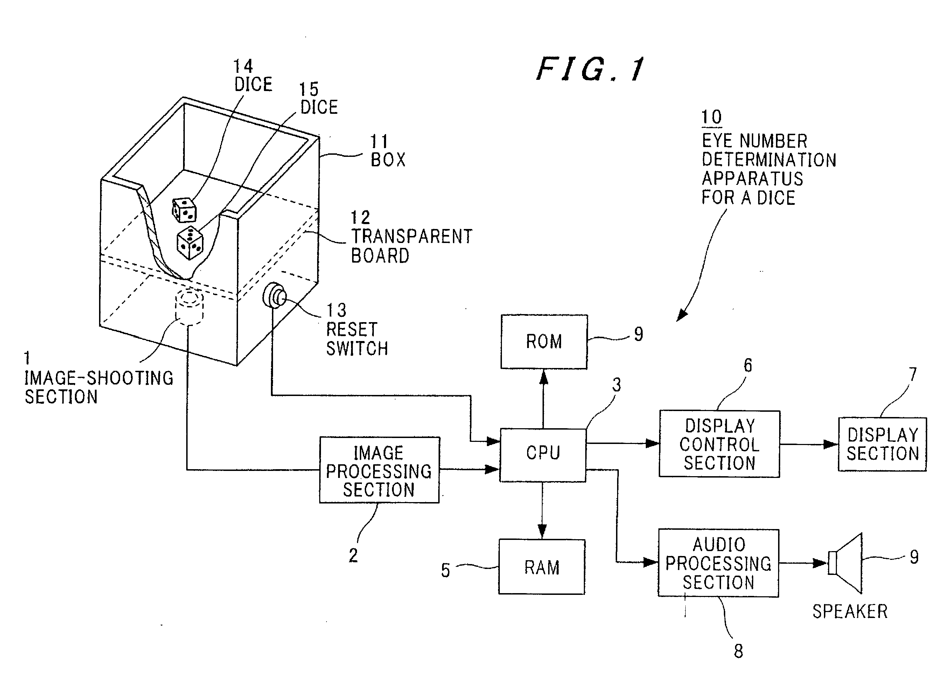

**FIG. 1** is a block diagram showing a constitution of a dice eye number determination apparatus. A dice eye number determination apparatus **10** comprises an image-shooting section **1**, an image processing section **2**, a CPU **3**, a ROM **4** (read only memory), a RAM **5** (random access memory), a display control section **6**, a display section **7**, an audio processing section **8**, a speaker **9**, a box **11** as a vessel, a transparent board **12** disposed inside the box **11**, and a reset switch **13**.

It is noted that in fact the connection between the CPU **3** and other circuit sections is made through an interface (I/F), which is omitted herein. And a determination section is composed of the image processing section **2**, the CPU **3**, the ROM **4**, and the RAM **5**, and an output section is composed of each of the display control section **6** and the display section **7**, and each of the audio processing section **8** and the speaker **9**.

Dice **14, 15** are available in the market and a player basically prepares them by himself or herself, and the dice **14, 15** may be attached to the dice eye number determination apparatus **10** for selling. In **FIG. 1**, the eye number is displayed in numbers and also outputted by audio, but may be either of them.

The image shooting section **1** is formed of an image sensor that can read by color or white and black, such as a CCD (charge coupled device) or a MOS (metal oxide semiconductor transistor), and the shooting principle of the image sensor is the same as a digital camera. As described later, since the eye "**1**" of the dice usually has red color, use of an image sensor to enable the color shooting is appropriate. However, since even in the image sensor in use for white and black, the red color is lighter reflected than the black color, or the eye "**1**" is usually different in size from the other eyes. This difference allows distinction between the eye "**1**" and the other eyes. Therefore, the image sensor for white and black may be used.

It is noted that in case a player is a student in the lower grades in an elementary school or a preschooler, it is thought that the player tends to bring his or her face close to the box **11** or looks in the box **11**. On this occasion, it is predicted that the image-shooting section **1** shoots both eyes of the player and recognizes the two eyes for the eye number "**2**" in error. Therefore, the image-shooting section **1** is equipped with a lens with a bright release F value to reduce depth of field, which allows only the dice to be clearly image-shot. Or an infrared sensor or the like may be disposed in the box **11** to detect that a player's face is coming close to the box **11** for emitting a warning.

In the image processing section **2**, a digital processing of an image signal is carried out by the image-shooting section **1**. The CPU **3** controls the entire apparatus, as well as processing shown in each flow chart as described later is carried out. The ROM **4** is a memory that stores programs for actuating the CPU **3** and can use a nonvolatile memory or a flash memory. The RAM **5** is a memory that temporarily stores setting values or processing results.

The display control section **6** performs control for displaying a determination result of the CPU **3**. The display section **7** comprises a colored or a monochrome liquid crystal display, a cathode ray tube, and the like and displays the determination result with regard to the eye number made by the CPU **3**. The audio processing section **8** performs voice synthesis of the determination result for outputting. The speaker **9** performs an electric-sound conversion with regard to an audio signal provided by the audio processing section **8** for outputting a voice.

The box **11** has an opening in an upper side thereof and has a transparent board **12** (transparent glass or transparent plastic) therein to divide the box **11** into two parts for forming an upper side and a lower side. A space above the transparent board **12** in the box **11** is a space for rolling dice. The image-shooting section **1** is installed on the bottom section. The image-shooting section **1** takes pictures of the lower faces of the dice **14, 15** as an object of shooting. Accordingly, when it is dark in the box **11**, a clear picture can not be taken. Therefore, the box **11** is formed of a transparent plastic or glass, or a lamp for illumination is disposed in the vicinity of the image-shooting section 1 inside the box **11**. Or an electronic flash (strobe) that momentarily emits light only in shooting an image may be used as a light source.

Further, a reset switch **13** hangs at a position within a player's reach on an outer wall of the box **11**. The reset switch **13** is operated for clearing the previous determination result in a case the dice **14, 15** (or one of them) are thrown after the dice has been rolled and the determination of the eye number for the dice has been made.

**FIG. 1**, when a player throws both the dice **14, 15** or one of them inside the box **11**, the dice **14, 15** rolled on the transparent board **12** stop with time. The lower faces of the dice **14, 15** after stoppage are shot by the image-shooting section **1**. The shot image is inputted in the image processing section **2**, which is converted to a signal format that can be processed by the CPU **3**. An image signal by the image processing section **2** is stored in the RAM **5** under control of the CPU **3**. The CPU **3** checks image contents of the image processing section **2** according to the program of the ROM **4**, to determine which of **"1" - "6"** the eye number on the dice **14, 15** is.

The determination result is displayed in numbers on a screen of the display section **7** through the display control section **6**. Further, the determination result is outputted in a voice with voice synthesis by the audio processing section **8** and the speaker **9**. In this case the audio output is performed only one time for one determination result, and the display on the display section **7** continues to be made until the next shooting timing.

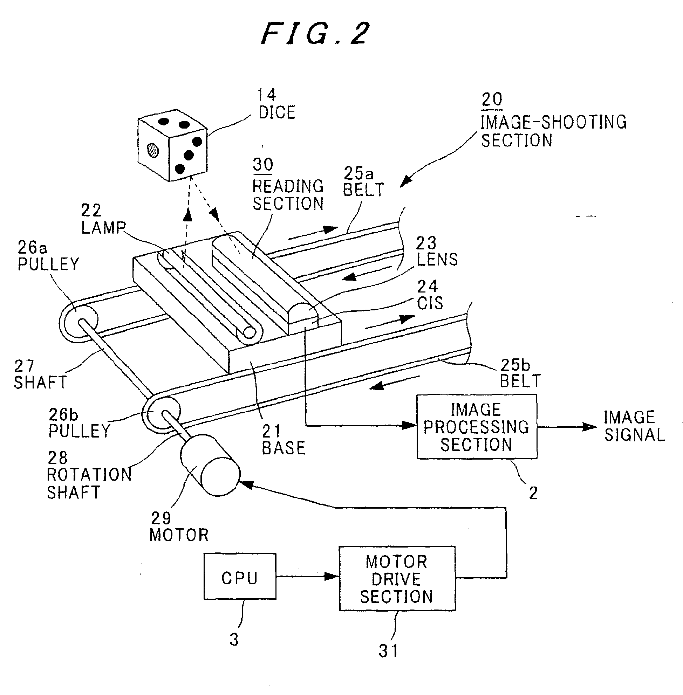

**FIG. 2** shows another constitution example of an image-shooting section. The image-shooting section **20** is formed in a scanner principle known as a peripheral device of a personal computer, and disposed under the lower face of the transparent board **12** (on the bottom face of the box **11**). The image-shooting section **20** comprises a base **21** reciprocating in the lower face of the transparent board **12**, a lamp **22** (a fluorescent lamp, a white LED, or the like) for illumination, a reading section **30** composed of a lens **23**, and a CIS **24** (Contact Image Sensor) and disposed in parallel to the lamp **22**, belts **25a, 25b** to reciprocate the base **21** under the lower face of the transparent board **12**, pulleys **26a, 26b** to rotatably support end sections of the belts **25a, 25b**, a shaft **27** connecting the pulleys **26a, 26b**, a motor **29** connected to the shaft **27** through a rotation shaft **28**, and a motor drive section **31** to drive the motor **29** under control of the CPU **3**.

It is noted that a chain may be used in place of the belts **25a, 25b** where a chain gear is used in place of the pulleys **26a**, **26b**. And a CCD image sensor may be used in place of the CIS **24**. In the case of using the CCD image sensor, an optical system as another example is adopted where a reflected image from a reading face is introduced through one or a plurality of mirrors and further through an imaging lens to the CDD image sensor.

In **FIG. 2**, when the motor drive section **31** is driven under the control of the CPU **3**, power is supplied to the motor **29**. The pulleys **26a, 26b** are rotated by rotation of the motor **29** and the belts **25a, 25b** are rotated in the direction of an arrow and at the same time the light **22** is switched on. The base **21** travels by rotation of the belts **25a, 25b**. As the base **21** travels, the surface of the transparent board **12** is continuously illuminated by an area corresponding to the lamp length and a predetermined width by the lamp **22**. The dice **14** is illuminated by this illumination and the reflected light from the lower face of the dice **14** is read in the reading section **30** and is supplied to the image processing section **2**.

The image-shooting section **1** in **FIG. 1** has the advantages that the number of the components is reduced and other than that, time required for image inputs is shortened since mechanical, movable parts are not used for image-reading. However, since a lens for imaging is used, extension of an image-receiving range lengthens a distance from a tip end of the image-shooting section **1** to the transparent board **12**, namely heightens a location position of the transparent board **12** and as a result, it is difficult to reduce the entire height of the box **11**. On the other hand, in the image-shooting section **20** in **FIG. 2**, the number of the components is increased, but since the thickness (height) of the image-shooting section **1** can be reduced, the location position of the transparent board **12** can be lowered. However, since the image-shooting section **20** performs the reading by traveling the reading section **30**, image-reading takes more time as compared to the image -shooting section **1**.

It is noted that the eye number is outputted such that the box **11** is stationary on a desk or a tatami mat and the dice is rolled on it, but the box **11** may be moved with the dice still put inside the box **11**. In this case if the opening of the box **11** is wide, the dice tend to jump out of the box **11**. Accordingly, it is preferable that a size of the opening of the box **11** is so small as to take in/out the dice and further, an entire weight of the box **11** is reduced.

And as in **FIGS. 1** and **2**, when the dice **14 (15)** is shot from the lower face side thereof, since a player who has rolled the dice looks at the upper face of the dice **14**, a difference in the eye number between the shot lower face and the upper face occurs. Therefore, it is necessary to correct a numerical value obtained by shooting the lower face with the eye number of the upper face. Namely a calculation of "7 - an image shooting value" may be performed. For example, when a value obtained by shooting the lower face of the dice **14** is "**6**", the eye number of the upper face of the dice **14** is admitted as "**1**", and likewise when a value obtained by shooting is "**2**", the eye number of the upper face of the dice **14** is admitted as "**5**". However, the eye number of the lower face may be the eye number as it is and in particular in case a box in which an upper face of the dice can not be seen from an outside of the box is used, it is preferable that the eye number of the lower face is determined as the eye number as it is, in view of no necessity of the above calculation.

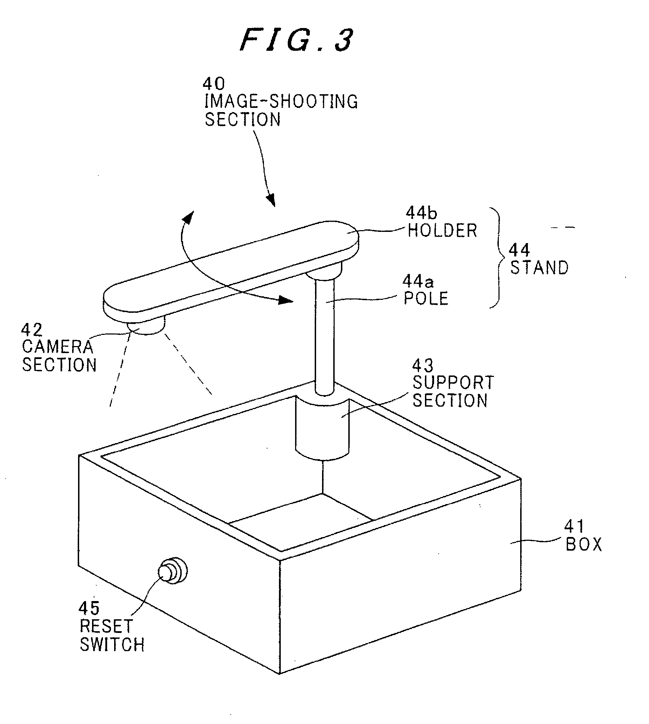

**FIG. 3** shows a further example of an image-shooting section. An image-shooting section **40** is adapted to image-shoot the dice from above the box **41**, as well as rotate a camera section **42** corresponding to the image-shooting section **1** in **FIG. 1** within an angle of at least 45° and further retreat the camera section **42** from the box **41** when unnecessary.

A support section **43** is formed in one corner of the box **41** and a stand **44** is rotatably mounted and movable upward and downward to the support section **43**. The stand **44** comprises a round rod shaped pole **44a**, and a holder **44b** that is mounted horizontally and rotatably at an upper end of the pole **44a**. The holder **44b** can be rotated horizontally with a hand and a tip of the holder **44b** is moved from one section of the box **41** to a center of the box **41**. The tip of the holder **44b** is positioned to be above the center of the box **41** when the camera section **42** shoots the dice **14** or the like.

The camera section **42** is mounted to a tip of the holder **44b**. The camera section **42** is formed of a camera, such as a combination of an optical lens and an image-shooting element of CCD or MOS and a lens, or a combination of the image-shooting element and the lens, further including an image processing section, and can take a picture of an entire bottom face of the box 11 within vision's field. Pushing an upper portion of the pole **44a** causes the height thereof to be lowered, and lifting up the pole **44a** causes the position of the holder **44b** to be raised. And a reset switch **45** having the same effect with the reset switch **13** in **FIG. 1** is mounted to the bottom face of the box **41**.

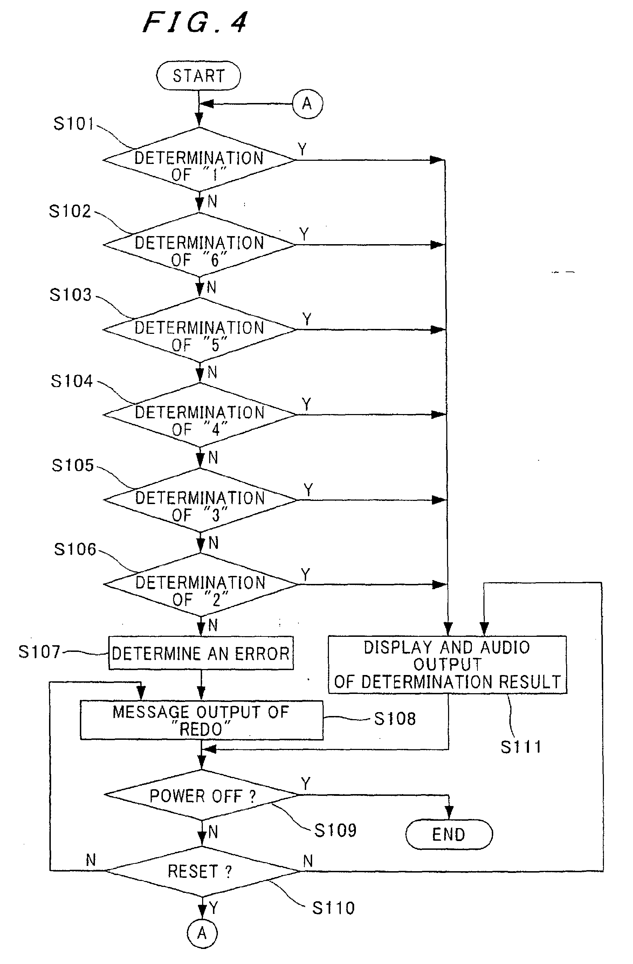

**FIG. 4** shows an entire processing of a dice eye number determination method in the first preferred embodiment according to the present invention. Processing contents shown in **FIG. 4** are stored as programs in the ROM **4**. And in the following explanation an eye number determination is made using the dice eye number determination apparatus method **10** shown in **FIG. 1**. Note that "S" shown in the flow charts in the following figures including **FIG. 4** indicates "step".

In the first preferred embodiment according to the present invention, the eye number determination is made by two steps as described below. The first step is to extract eyes of the dice from an image. The second step is to determine an eye number of the dice from a location relation or the like of the extracted eyes. Namely the eye number is determined based upon detection information such as a location relation, diameters or colors of the eyes. A dice is usually expected to have a clear contrast in a density (color) between the face and the eye of the dice and therefore, the eye can be extracted based upon distribution and inclination of density values. Such processing enables the eye number determination even when the boundary between the dice closely placed is not distinct due to low resolution caused by low contrast in brightness or color between the face of the dice and the background thereof.

When the power switch is on, the dice eye number determination apparatus **10** shown in **FIG. 1** starts to operate, and the initialization (the same as the state where the reset switch **13** is pushed) is performed. Then a player throws a plurality of dice into the box **11**. One of two dice **14**, **15**, both thereof, or more than two can be used, and herein two dice **14, 15** are supposed to be used where the eye number is a lower face of each dice **14, 15**. When the dice **14, 15** are thrown into the box **11**, the dice **14, 15** are rolled and traveled on the transparent board **12**, and stop. The lower faces of the dice **14, 15** after the stop are shot by the image-shooting section **1**. The CPU **3** performs processing according to **FIG. 4** based upon image information by the image-shooting section **1**, and determines which one of "**1**", "**6**", "**5**", "**4**", "**3**," and "**2**" the eye number of each dice **14, 15** is.

The image-shooting by the image-shooting section **1** is performed by scanning the transparent board **12** from one end toward the other end thereof. Therefore, in case two dice **14, 15** are lined in the direction of the sub scanning, the eye number is determined for the dice shot first, and then, for the dice shot subsequently. And in case two dice **14, 15** are lined in the direction of the main scanning, the eye number determination is thus made in order of scanning.

However, when the two dice **14, 15** stop to be close with each other, a determination error of the eye number tends to occur. According to the first preferred embodiment, it is desired that a determination is not made in order of the dice scanned, but an entirety of two dice is scanned as one image, and then a determination of the eye number is designed to be made.

The determination of the eye number is made by recognizing the number (at least one eye, and at maximum six eyes) of eyes existing in a predetermined area. However, there is a case where two dice happen to stop to be close with each other in case a plurality of dice are used, different from a case one dice is used . For example, when the faces of the two dice showing the eye number "**1**" happen to be the lower faces thereof (namely, image-shooting faces) at a time and then the two dice stop, the eye number tends to be determined to be "**2**" as the eye number of the one dice in error without recognizing the eye number of each dice as "**1**", or tends to recognize the eye to be a part of the other eye number in error. Therefore, in the first preferred embodiment according to the present invention, the following method is applied in the case of the eye number determination.

It is required that the eye number "**1**" is determined first and then is excluded before determination of other eye numbers is made. Excluding the eye number "**1**" first prevents the eye "**1**" from being recognized as a part of a pattern of the other eye number in error. A dice available in the market has the feature that the eye "**1**" is larger in size than the eyes of the other eye numbers, and is colored in red. Accordingly when the red color is included in the image-shooting information by the image-shooting section **1**, it is determined immediately that the eye number of the dice is "**1**" (S101).

Since a dice does not have a unified standard in the industry organization, there is a slight difference in an outer size of the dice or an eye size of the dice between manufacturers. And there is a case the eye "**1**" is colored in black. Therefore, the eye number "**1**" is designed to be determined based upon anything other than colors. For example, in case the eye "**1**" is colored in black and a size of the dice is limited to a certain degree, the eye number "1" is determined not based upon the color of the eye but based upon a diameter of the eye, or the eye number is determined as "1" if the distance of the eye to the nearest eye is longer than one section out of the four sections of the dice.

In a case the eye number "**1**" is determined, the CPU **3** controls the display control section **6** to display the number "**1**" on the display section **7**, as well as outputs a voice corresponding to "**1**" through the speaker **9** (**S111**). And in a case the eye number "**1**" is not determined, a determination of the eye number "**6**" is made (**S102**). In a case the eye number "6" is determined, the eye number "**6**" is displayed on the display section **7** and further, is outputted as a voice. In a case the eye number "**6**" is not determined, a determination of the eye number "**5**" is made (**S103**). The eye numbers "**4**", "**3**", and "**2**" are determined in order in the same way as the above (**S104, S105, and S106**). In a case the eye number is not determined even in **S106**, it is possible not to obtain clear shooting images because of problems with a location of the box **11**, existing positions of the dice **14**, 15, illumination conditions, and the like. Accordingly, an error determination is made (**S107**) and a message to roll the dice **14, 15** once more is displayed or outputted in a voice (**S108**).

And it is detected whether or not power source of the dice eye number determination apparatus **10** is switched off (**S109**). The power source of the dice eye number determination apparatus **10** is switched off when the game is finished or a player becomes bored of the game half way. Therefore, on/off of the power source is detected. In a case a player rolls the dice **14, 15** again according to the message **S108**, after the dice **14, 15** rolled previously are taken out of the box **11**, the determination contents and the display state are cleared by pushing the reset switch **13**. Herein, a player throws the dice **14, 15** into the box **11**. This action causes the eyes of the dice **14, 15** to be newly shot by the image-shooting section **1**. Thereafter, processing of **S101** - **S111** is performed again as described above.

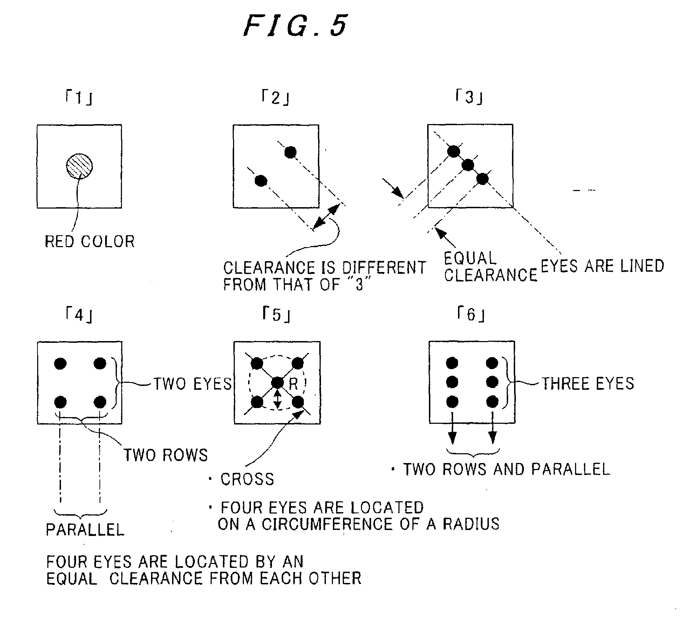

**FIG. 5** shows featuring items of each eye as factors for determining the eye numbers of "**1**" - "**6**" for the dice. Each eye can be distinguished using the featuring items to determine the eye number. As shown in **FIG. 5**, the one eye as the eye number "**1**" is different from the eyes of the other eye numbers and has the feature in color (red circle or the like) or in size (a diameter thereof is greater than that of the eyes of the other eye numbers) . A clearance between the eyes of "**2**" is different from a clearance between the eyes of "**3**". The eye number "**4**" has two rows of two eyes, which are parallel with each other. The eye number "**5**" has five eyes located on the face to form the cross, and also the four eyes are located on a circumference of the same radius away from the center eye. Further, the eye number "**6**" has two rows of three eyes, and the two rows are parallel. The processing as explained below is performed based upon such feature with regard to the locations of the respective eyes of the dice.

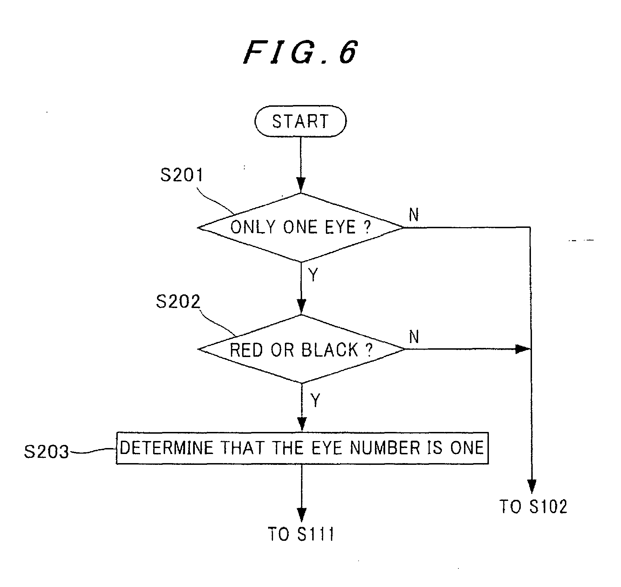

**FIG. 6** shows a detailed processing of **S101**. When it is determined that the eye of the dice is one red eye or one black eye (**S201, S202**) , it is determined that the eye number is "**1**" (**S203**) and thereafter, the processing goes to S111. And when it is not determined that the eye number is "**1**", the processing goes to **S102** in **FIG. 1**.

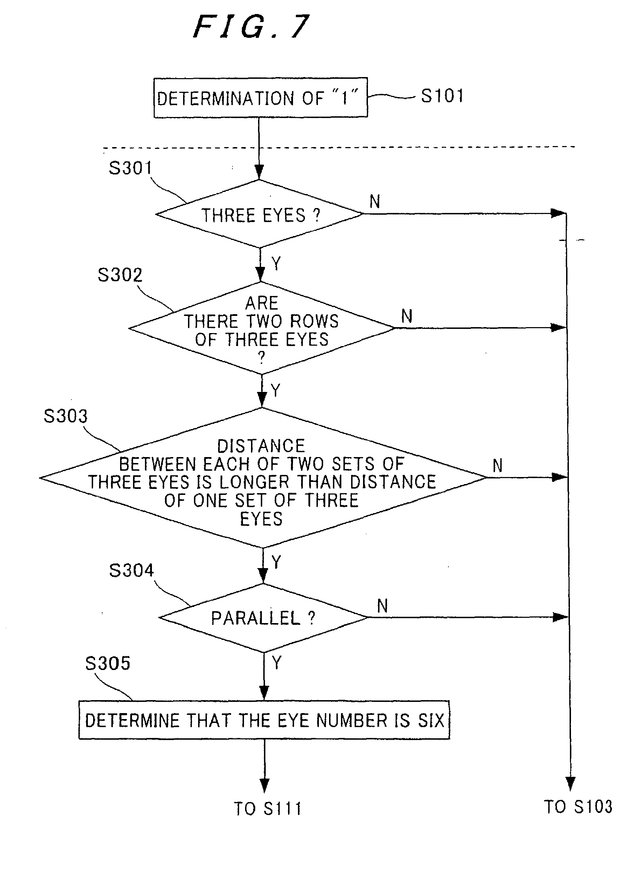

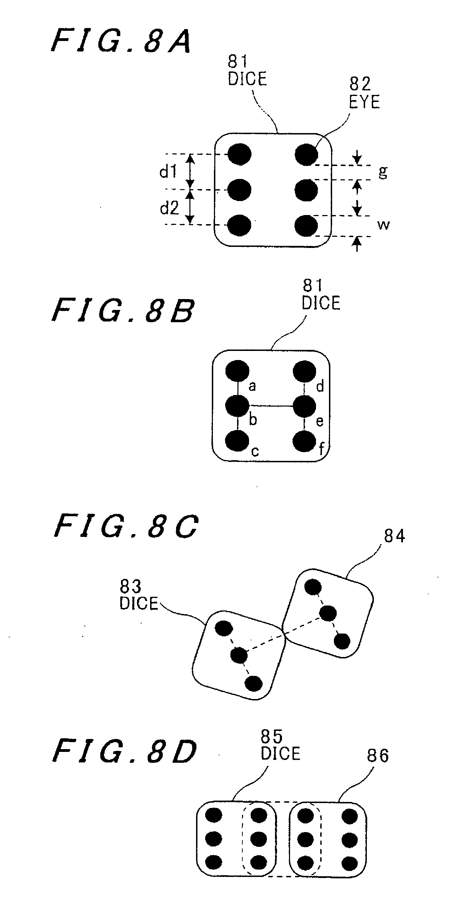

**FIG. 7** shows a determination processing of the eye number "**6**". And **FIGS. 8A, 8B**, and **8D** show a detailed location of each eye of the eye number "**6**" and **FIG. 8C** shows a location of the eye number "**3**". In the eye number "**6**" of the dice as shown in **FIGS. 5** and **8**, three eyes are closely in a line and two sets of the three eyes are located in two rows. As shown in **FIG. 8C**, there possibly occurs the event that the eye numbers of two dice both are "**3**" and the two dice are closely in a line. In this case, it is determined whether or not a distance between each three eye of one set and each corresponding three eye of the other set is shorter than a length of the one set (the length formed by three eyes).

And in a case the two dice **85, 86** are contacted in a line, each showing the eye number "**6**" as shown in **FIG. 8D**, it is possible that three eyes of the one dice and the neighboring three eyes of the other dice are recognized to be the eye number "**6**" in error. In order to avoid such erroneous recognition, the sets of the three eyes shot are not set at random, but set for example in order from the left to the right and thereafter, the other eyes in the right and the left direction are determined.

With regard to the condition in order that a set of three eyes is determined to be "**6**" as the eye number, as shown in **FIG. 8A**, three eyes **82** of the dice **81** are in a line and a distance "d1" between the one and the center eye is equal to a distance "d2" between the other and the center eye (d1 is nearly equal to d2), and also the three eyes are very closely positioned. A clearance "g" between an eye and an eye is usually small than a diameter "w" of the eye (g<w) and each of the distance "d1" and the distance "d2" is less than twice the diameter of the eye (a distance "d" of the dice available in the market is mostly approximately 1.74 w) . Next a determination processing of the eye number "**6**" will be explained with reference to **FIG. 7**.

First, it is determined whether or not three eyes exist (**S301**) and next it is determined whether or not two sets of the three eyes is located in two rows (**S302**) , and then it is determined whether or not a distance between each of the three eyes is longer than a length of one set formed with the three eyes (**S303**). Further, it is determined whether or not the two rows are in parallel and also in the square state (**S304**).

Further, the determination of the eye number "**6**" is made such that when the plurality of the dice are located together to form the eye number "**6**" with three eyes and three eyes adjacent to the three eyes, it is determined whether or not the formed eyes are the right eye number "**6**" based upon a clearance between the central eyes or an eye existing in the direction different from the location direction of the three eyes.

In a detail, as shown in **FIG. 8B**, it is determined whether or not the line of the eyes "a" - "c" is parallel to the line of the eyes "d" - "f", as well as the line of the eyes "a" - "c" (or "d" - "f") is substantially vertical to the line of the eyes "b" - "e" (or, the eyes "a" - "d" or the eyes "c" - "f"). Or it may be determined whether or not the line of the eyes "a" - "c" the same in length as the line of the eyes "d" - "f". And it is determined whether or not the line of the eyes "b" - "e" is longer than the line of the eyes "a" - "c" or the line of the eyes "d" - "f" so that a state where two dice each having the eye number "3" are placed parallel to each other is not recognized in error to be the eye number "6". In a case the line of the eyes "b" - "e" is longer than the line of the eyes "a" - "c" or the line of the eyes "d" - "f", it is determined that the eye number is not "6". It is noted that the line of the eyes "a" - "c" or the like indicates a distance or a length between two eyes ("a" and "c").

**FIG. 8D** shows a case where two dice **85, 86**, each having the eye number "**6**" are adjacently and also in the same direction placed. In this case it is possible to recognize the eye number "**6**" with a combination of three eyes of one dice and three eyes of the other dice. Accordingly, in coping with this problem, sets of three eyes shot are set not at random, but in order from the right to the left.

According to the determination processing described above, the eye number "**6**" can be recognized. If the determination of the eye number "**6**" is made prior to determination of the other eye numbers, loads in the subsequent determination processing are reduced, which enables earlier finish of an entire determination processing.

In a case the above three conditions are cleared, the eye number "**6**" is determined (**S305**), the processing goes to **S111** in **FIG. 1**. And in a case even one of the three conditions is not cleared, the eye number "**6**" is not determined and the processing goes to **S103** in **FIG. 1**. The earlier determination of the eye number "**6**" in **FIG. 7** brings out reduction of loads in subsequent processing, thereby to provide earlier finish of an entire processing in **FIG. 4**.

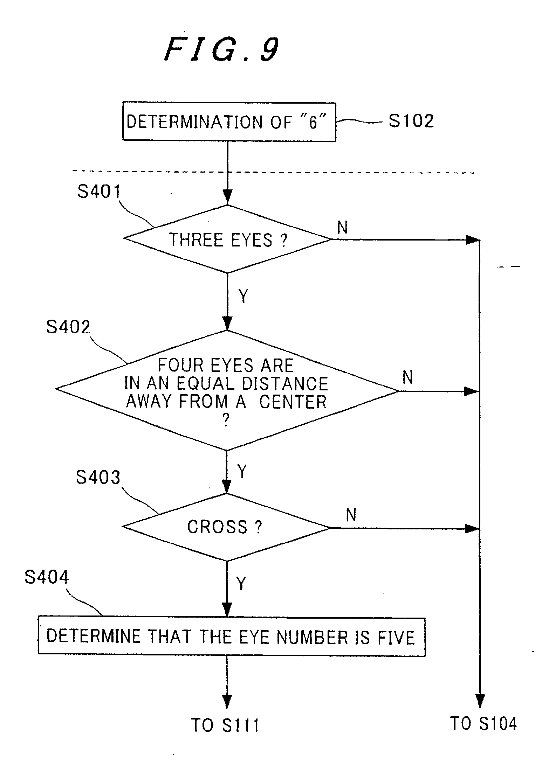

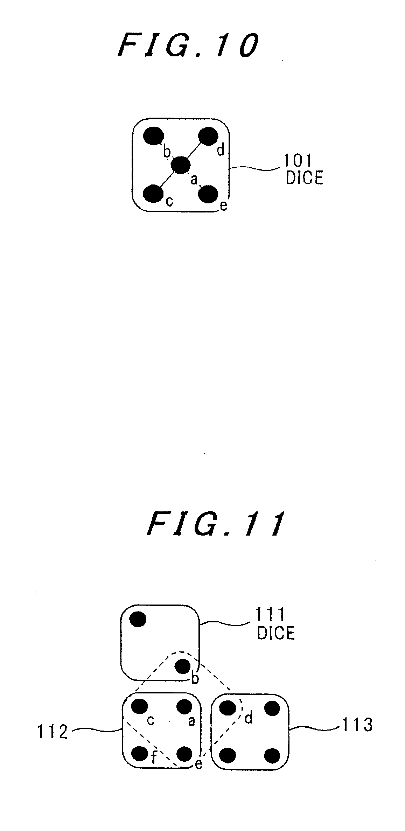

**FIG. 9** shows a determination processing of the eye number "**5**". **FIG. 10** shows a location of the eyes of the eye number "**5**". In the eyes of the eye number "**5**", as shown in **FIGS 5** and **10**, four black eyes are located on the four corners of a quadrangle and one black eye is located in the center thereof. In other words, since the black eyes are located on a cross, it is determined that the eye number is "**5**" depending on whether or not the five black eyes are located on a cross. According to further consideration, in the eye number "**5**", four black eyes surrounding the black eye in the center are in the same distance away therefrom. Accordingly it is the condition for the determination of the eye number "**5**" whether or not the black eyes are located on the cross and the four black eyes are located in the same distance away from the center.

First, it is determined whether or not the number of black eyes is three (**S401**). This processing is because of recognition for the center of the cross. In a case three black eyes exist, it is determined whether or not four black eyes are located in the same distance away from the center of the three eyes (S402). Next, in a case four black eyes exist in the same distance away from the center, it is determined whether or not the black eyes are located on the cross (at right angles)as a whole (S403).

Namely the eye number "**5**" is determined based upon whether or not five eyes shown in **FIG. 10** have the relation as shown below.

$$\left| \text{"a"} - \text{"b"} \right| \approx \left| \text{"a"} - \text{"c"} \right| \approx \left| \text{"a"} - \text{"d"} \right| \approx \left| \text{"a"} - \text{"e"} \right| \ (\text{equal clearance})$$

$$(\text{"b"} - \text{"e"} \cdot \text{"c"} - \text{"d"}) / (\left| \text{"b"} - \text{"e"} \right| \cdot \left| \text{"c"} - \text{"d"} \right|) \approx 0 \ (\text{vertical crossing})$$

In a case the above condition is cleared, it is determined the eye number is "**5**" (**S404**), the processing goes to **S111** in **FIG**. **1**. And in a case even one of the three conditions is not cleared, it is not determined that the eye number is "**5**", and the processing goes to **S104** in **FIG**. It is noted that the determination of the eye number "**5**" is made based upon the condition that any eye of the five eyes does not have the feature of the eye number "**1**". However, if the determination of the eye number "**1**" is, as shown in **FIG. 4**, made before the determination processing of the eye number "**5**", the processing of this confirmation is not necessary.

**FIG. 11** shows a case where three dice **111, 112,** and **113** stop in a collective state, as well as the eye numbers thereof become respectively "**2", "2",** and "**4**". In this case the eye number "**5**" is formed in the center of the three dice as shown in a dotted line. The processing of this case will be explained as below.

Since an eye number pattern of "**5**" in this case is larger in size than an actual dice, it is determined that the eye number is not "**5**", and this pattern can be excluded from the determination results. It is noted that there is a method of determining that the eye number is not "**5**" based upon the condition except for the size of the dice. Namely it is determined based upon whether or not an eye "f" forming a part of an eye number pattern of "**4**" exists in the vicinity of the dice **112** having the eyes "a", "c", and "e" of the eye number "**5**".

If the eye "f" is found, it is assumed that the eye number shown in a dotted line by the five eyes "a", "b", "c", "d", and "e" is not "**5**". The reason is that if the eyes "a", "b", "c", "d", and "e" are the eyes of the eye number "**5**" of the dice, the eye "f" does not come close to the dotted line showing the border. The inventors have confirmed that this respect is correct by checking various kinds of dice available in the market.

It will be confirmed by the above similar method whether ornotanothereye (for example, the "X") having the feature similar to the eye "f" exists in the other three eye number patterns of the eyes "a", "b", and "c", the eyes "a", "b", and "d", and the eyes "a", "b", and "e". For example, whether or not the eye "X" is paired to the eyes "a", "c", and "e" to form the eye number pattern of "**4**" can be determined based upon whether or not a set of the eyes "a" - "x" is substantially as long as a set of the eyes "c" - "e", and also each set is crossed in the vicinity of respective centers.

The eye number "**5**" can be recognized by the determination processing described above. An earlier determination of the eye number "**5**" causes easier processing of subsequent other eye number determinations to shorten finish time of an entire processing. And the eye number determination of "**5**" can be incorporated in a method of "the processing starts with an end eye" described later. In this case, withnopossibilityof erroneous recognition of the eye number "**4**" of the dice, the determination processing of the eye number "**5**" becomes simple.

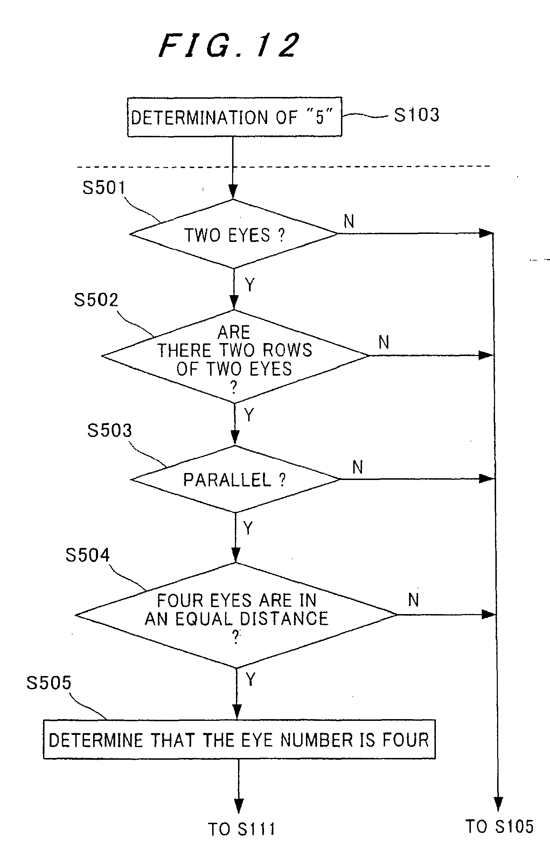

**FIG. 12** shows a determination processing of the eye number "**4**". In the eye number "**4**", as shown in **FIG. 5**, four black eyes are vertically arranged. Accordingly when the four black eyes exist, the eye number "**4**" is nearly determined. According to further consideration, if in four eyes, twolines, eachconnecting two black eyes, are respectively crossed vertically, and each line has substantially the same and appropriate length, and the crossing point of the two lines is in the vicinity of the respective centers, it is found that the eye number is "**4**". And there is a possibility that two eyes of the two dice come close to seemingly form the eyes "**4**". Accordingly whether or not the four black eyes are located in an equal distance is also included in the determination condition.

First, it is determined whether or not the number of the eyes of the dice is two (**S501**). Next, it is determined whether or not there are two rows of two eyes (**S502**) . The four eyes to show the eye number "**4**" is recognized based upon this determination. Next, it is determined whether or not two rows of the two eyes are parallel (**S503**), and further, it is determined whether or not each of four eyes is mutually in an equal distance from two eyes adjacent thereto (**S504**). When each condition described above is cleared, it is determined that the eye number is "**4**" (**S505**), the processing goes to **S111** in **FIG. 1** . On the other hand, when even one of the four conditions is not cleared, it is not determined that the eye number is "**4**", and the processing goes to **S105** in **FIG. 1**.

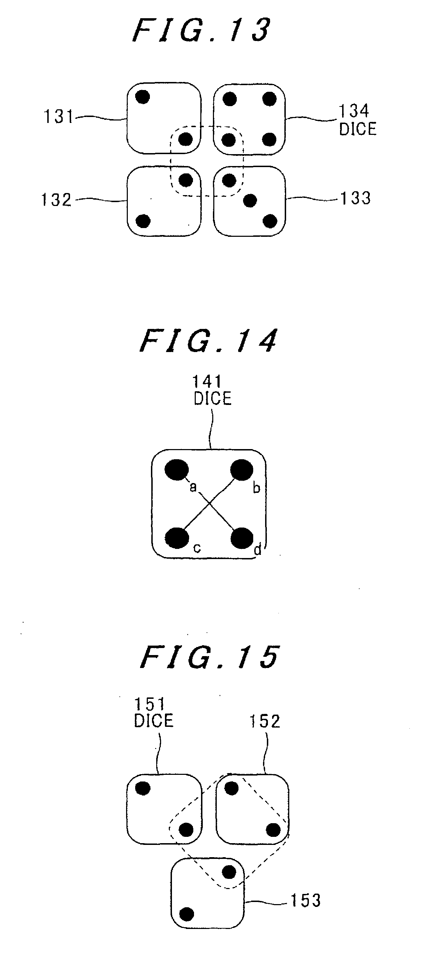

**FIG. 13** shows a case where a plurality of dice are rolled to be placed in a collective state to form the eye number "**4**" in the center. As an example to form such eye number pattern, there is a case four dice **131, 132, 133,** and **134** are located in a collective state to form a quadrangle as a whole, and the respective eye numbers are shown as "**2", "2", "3",** and "**4**". In this case the eye number "**4**" is formed in the center as shown in dotted line. Since in this case, not only the eye number "**4**" but also the other eye number patterns such as the eye numbers "**2**", and "**3**" are possibly determined, the eye numbers can not be simply determined unlike the eye number "**6**" or "**5**" described above.

Therefore, based upon an eye in the outmost end in an image, an eye number of a dice including the eye of the outmost end is processed by a method explained below.

This processing will be repeated by setting the eye existing in the outmost end in the image as a base point in order until an unprocessed eye does not exist. This allows the eye numbers "**4" - "2**" to be determined. It is noted that in the process of performing this processing, the determination of the eye numbers "**1", "5",** and "**6**" is possible to make. This processing will be explained in detail later.

This processing determines, based upon the eye existing in the outmost end in an image, that the eye number is "1" , "6", "**5", "4", "3",** or "**2**". For example, a distance between the eyes is used for eye number determination. Since two eyes having the longest distance therebetween in the image are the eyes positioned in the outmost end in the image, it is all right only if the respective two eyes or either one of the two are processed. When the eye number with regard to eyes including an eye (first unprocessed end eye) existing in the outmost end in the image is determined and its processing is finished, the near unprocessed eye is set as an unprocessed end eye (second unprocessed end eye) and will be processed in order.

First, if the end eye unprocessed in the image has the feature of the eye "**1**" described above, the eye number is determined/confirmed as "**1**".

If recognition of the eye number "**1**" is finished, it is not necessary to determine a determination of the eye number "**1**" newly.

Next, it will be determined whether or not the eye number is "**6**". If the end eye unprocessed in the image is a part of the eye number "**6**", that part is the end eye in the three eyes closely placed in series in the eye number pattern of "**6**", and an eye closest to the end eye is a central eye of the three eyes. If the above eye number pattern of "6" corresponds to this state the eye number is determined to be "**6**". It is noted that herein the false eye number pattern "**6**" as shown in **FIG. 8D** is not necessary to consider. In this case, if the recognition of "**6**" is finished, it is not necessary to perform the determination of "**6**" newly.

Next, following the determination of whether or not the eye number is "**6**", it will be determined whether or not the eye number is "**5**". If the end eye unprocessed in the image is a part of the eye number "**5**", the end eye is any one of four eyes other than the central eye out of the pattern of "**5**" , and the eye closest to the end eye is the central eye of the pattern "**5**". If the pattern of "**5**" corresponds to this condition, the eye number "**5**" can be determined. In this case, consideration of the false eye number pattern "**5**" as shown in **FIG. 11** is not necessary, and a limit to a clearance between eyes may be set in accordance with a size of the dice. In this case, if the recognition of the eye number "**5**" is finished, it is not necessary to perform a determination of the eye number "**5**" newly.

Next, it is performed to determine whether or not the eye number is "**4**". If the end eye "a" unprocessed, as well as the eyes "b", "c", and "d" forming the eye number pattern "**4**" exist in the image, the eye "a" is a part of the eye number "**4**" **or** "**5**". However, it is the condition that any eye does not have the feature of the eye number "**1**". It is noted that if the determination of "**1**" is determined in advance, this determination is not necessary.

**FIG. 14** shows an eye location of the eye number pattern "**4**". In **FIG. 14,** whether or not four eyes of the dice **141** show the eye number pattern "**4**" can be determined based upon the following equation.

Condition **1**: | "a" - "d" | ≈ "b" - "c" |
Condition **2**: ("a" - "d" · b" - "c") / (| "a" - "d"| · | "b" - "c"|) ≈ 0 (vertical crossing)
Condition **3**: A line component "ad" and a line component "bc" are crossed respectively in the vicinity of the center of each line.

Further, it is predicted that a plurality of dice are collected to form the eye number "**4**".

**FIG. 15** shows a case where three dice, each having the eye number "**2**", are collected to form the eye number pattern "4". In order to exclude that the eye number "**4**" is determined in such case, a limit to a clearance between eyes is required to be set in accordance with the size of the dice. For example, a size of the dice used may be restricted to define a certain value to the limit or the limit may be changed based upon a diameter or the like of the eye.

If the eyes "a", "b", "c", and "d" meet the above conditions 1 - 3, the eyes "a", "b", "c" and "d" can be assumed to be a part of the eye number "**4**" or "**5**". Accordingly in a case it will be determined whether or not the eye number is "**4**" after it is determined whether or not the end eye "a" is a part of the eye number "**5**", since at this timing the eye number is never "**5**", it can be determined immediately that the eyes "a", "b", "c" and "d" is the part of the eye number "**4**". Or it may be checked whether or not another eye exists inside the eyes "a", "b", "c" and "d".

When the end eye "a" unprocessed in the image does not correspond to anyone of the determination conditions of the above-mentioned eye numbers "**6**", "**5**", and "**4**"**,** the eye number may be assumed to be the eye number "**3**" or "**2**". Namely if an eye forming the eye number pattern "**3**" together with the end eye "a" and the eye "b" closest to the end eye "a" exists, the eyes "a", "b", and "c" are a part of the eye number "**3**".

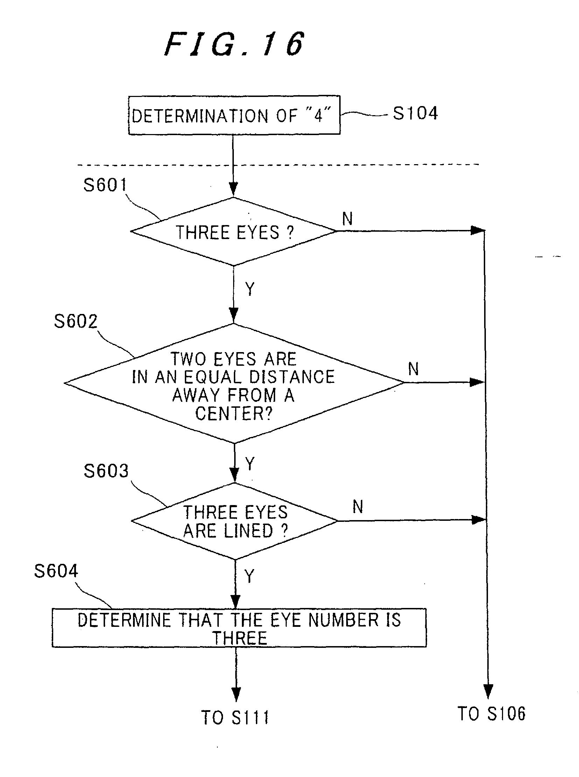

FIG. 16 shows a determination processing of the eye number "3".

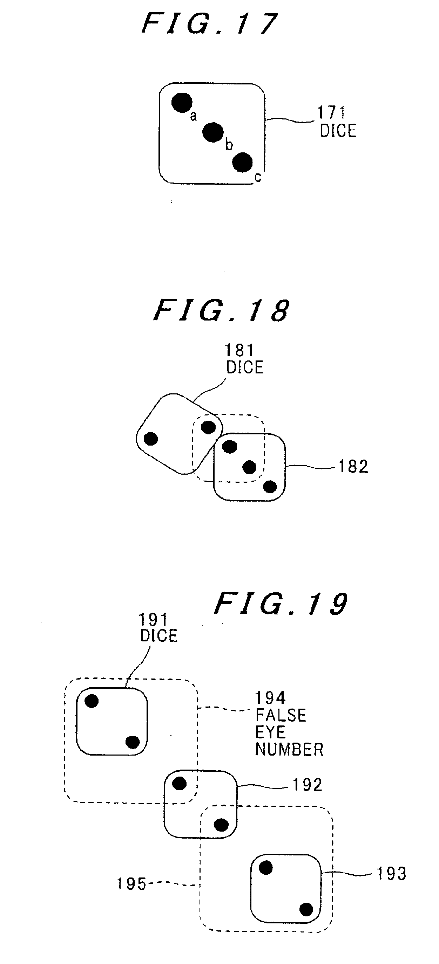

FIG. 17 shows an eye location of the eye number pattern "**3**". In **FIG. 17**, whether or not three eyes "a", "b", and "c" of the dice **171** show the eye number pattern "**3**" can be determined based upon the following conditions. The eye number "**3**" of the dice **171**, as shown in **FIG. 5**, is a pattern where three black eyes are arrayed. Accordingly if the two eyes exist in an equal distance away from the center and in a linear line, the eye number "**3**" can be determined. Namely when the following two conditions are met, the eye number "**3**" can be determined.

Condition **1**: | "a" - "b" | ≈ | "b" - "c" | (equal clearance)

Condition **2** :("a" - "b" · "b" - "c") /(| "a" - "b" | · | "b" - "c" |) ≈1 (series)

The determination processing of the eye number "**3**" will be explained with reference to **FIG. 16**. First, it is determined whether or not the number of black eyes is three (**S601**). Only this determination does not enable distinction to three eyes lined obliquely in the eye number "**5**". Accordingly it is determined whether or not two black eyes are located in the same distance away from the center of the three eyes (**S602**). Next, in a case two black eyes exist in the same distance away from the center, it is determined whether or not the three black eyes including the two black eyes are located in a linear line (**S603**).

In a case the above conditions are cleared, it is determined the eye number is "**3**" (**S604**), the processing goes to **S111** in **FIG. 1**. And in a case even one of the three conditions is not cleared, it is not determined that the eye number is "**3**" , and the processing goes to **S106** in **FIG. 1**.

**FIG. 18** shows a case where two dice **181, 182** are located in a collective state and three eyes are formed in the contacting portion between the two dice. In a case the eye number of the dice **181** is "**2**" and the eye number of the dice **182** is "**3**", the eyes of the eye number "**3**" are formed by two eyes of the dice **182** and one eye of the dice **181**. The processing to prevent the eyes "**3**" in this state from being determined as the eye number "**3**" in error is the same as in a case in **FIG. 13** and consideration is paid to the eye positioned in the outmost end in the image, which may be processed using the distance between the eyes.

In a case the eye to meet the two determination conditions of the eye number "**3**" does not exist, two eyes "**a**", "**b**" are determined as the eyes of the eye number "**2**". However, for determinations of the eye numbers "**3**" and "**2**", it is the condition that any one of the eyes does not have the feature of the eye number "**1**". It is noted that when it is already determined that the eye number is "**1**", this determination is not necessary.

**FIG. 19** shows a case where when three dice are collected, the eye numbers "**2**" and "**3**" are formed depending on the location relation of the three dice. For example, six eyes of three dice **191, 192, 193**, each having the eye number "**2**", are located in a linear line, two sets of the eye number "**3**" shown in a dotted line frame and one set of the eye number "**2**" of the dice **192** between the two sets tend to exist in the linear line. Namely false eye numbers **194, 195** tend to are generated. However, the false eye numbers can be distinct based upon a clearance between the eyes. An allowance range of the clearance between the eyes may be defined by limiting the size of the dice or based upon a diameter or the like of the eye.

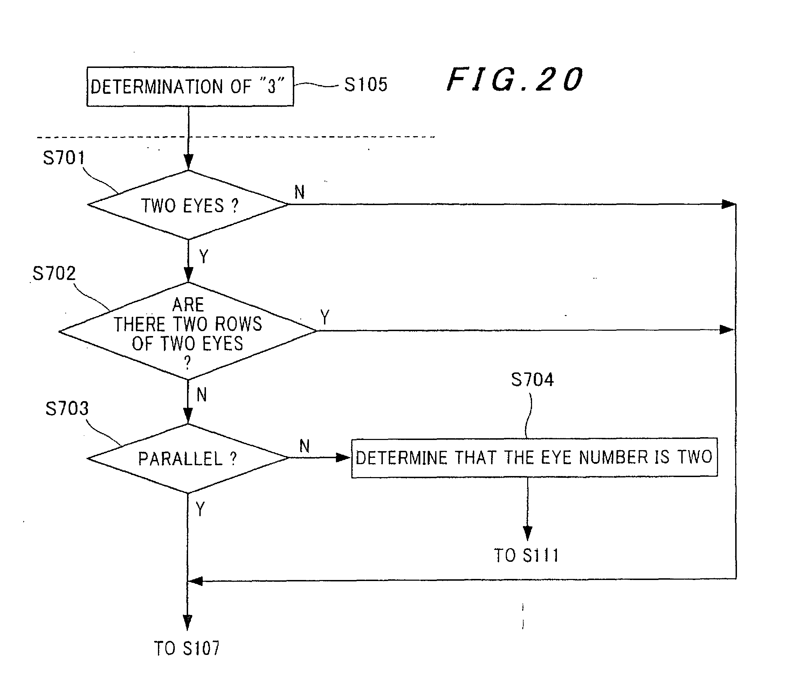

**FIG. 20** shows a determination processing of the eye number "**2**". The eyes of the eye number "**2**" of the dice, as shown in **FIG. 5,** has two eyes. The eye number "**2**" is determined as "**2**" based upon that two black eyes are in a line, as well as the eye number "**2**" is not a square shape (distinction to the eye number "**4**" is possible by it). However, an erroneous recognition with regard to the eye numbers "**2**", "**3**" possibly occurs depending on the location relation, and the erroneous recognition can be avoided based upon the clearance between the eyes.

First, it is determined whether or not the number of the eyes of the dice is two (**S701**) . Next, the eye number is determined as "**2**" (**S704**) based upon a state where two eyes are not formed by two rows of one eye and two rows of two eyes are not parallel unlike the eye number "**4**" (**S702, S703**), and then the processing goes to **S111** in **FIG. 1**. When even one of the determinations of **S701 - S703** is not cleared, it is not determined that the eye number is "**2**", and the processing goes to **S107** in **FIG. 1**.

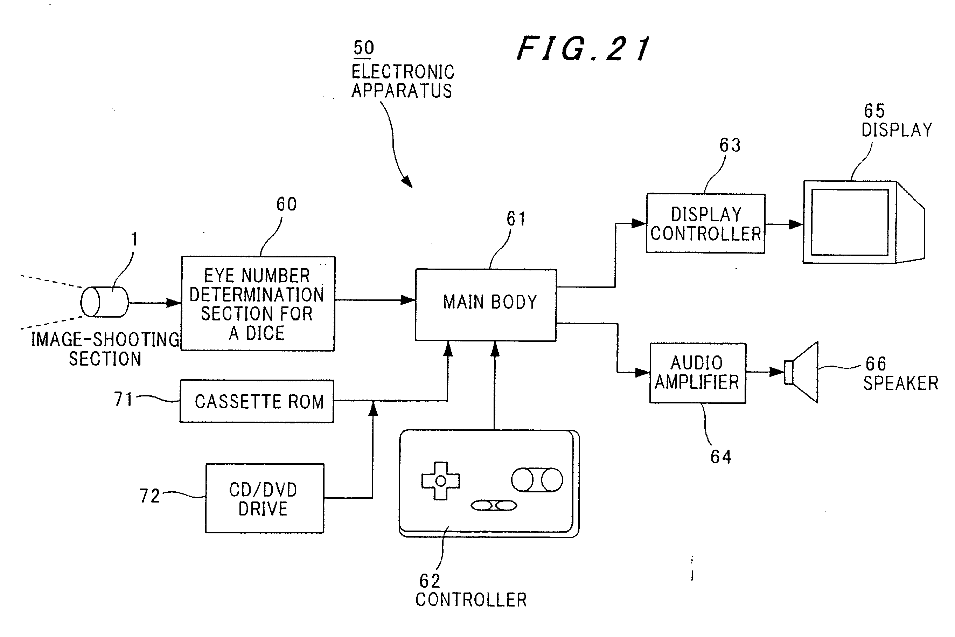

**FIG. 21** shows an electronic apparatus in a second preferred embodiment according to the present invention. This electronic apparatus is an electronic apparatus 50 for a game formed with the dice eye number determination apparatus **10** and the image-shooting section shown in **FIGS. 1 - 3.**

Nowadays there are various kinds of game machines. It is popular that a memory medium such as a CD (compact disc) storing game software or a ROM cassette storing a semiconductor memory therein is installed to play a game. On the other hand, a game using a traditional dice is a different fun. However, when a player recognizes eyes of a dice with a player's eyes in a game using such dice, and determines the eye number of a dice by a player's judgment, generations familiar with electronic game machines tend to have a sense of discomfort for such game. If determination of the eye number of a dice is electronically processed, users for electronic game machines can be excited about games using the dice. The electronic apparatus **50** in the second preferred embodiment according to the present invention is provided to meet such demand.

**FIG. 21** shows the electronic apparatus **50** that comprises a dice eye number determination section **60** having substantially the same components with the dice eye number determination apparatus **10**, a main body section **61** to which a cassette ROM **71** or a CD/DVD drive **72** is mounted, a controller **62** for games operated by a player, a display controller **63** for display control, a display **65** connected to the display controller **63**, an audio amplifier **64** connected to the main body section 61 to amplify voices, and a speaker **66** connected to the audio amplifier **64** to output voices.

The dice eye number determination section **60** is formed of the dice eye number determination apparatus **10** excluding the display control section **6**, the display section **7**, the audio processing section **8**, and the speaker **9**. The excluded functions are performed by the display controller **63** connected to the main body section **61**, the display **65**, the audio amplifier **64,** and the speaker **66** as alternatives.

The main body section **61** is a computer comprising a CPU, a ROM, a RAM, a bus interface, an input/output interface, and power source section and is operated by programs stored in the ROM. The controller **62** for the game is operated by a player in playing a game, and is equipped with a function key, a cross key, and other keys and is connected to the main body section **61** through a cable. The display **65** may be formed of a CRT, a crystal display or the like.

Herein the display **65** is a display exclusively for games, but if the display **65** is connected to the main body section **61** through a converter converting a picture signal, a receiver for TV broadcasting may be used as a display. And the main body section **61**, the display **65,** and the dice eye number determination section **60** are formed separately. However, these components and further the display controller **63**, the audio amplifier **64,** the display **65**, the speaker **66**, and the CD/DVD drive **72** housed in the display **65** may be integrally formed. In reverse, the display **65** and the other components may be housed in the main body section **61** for integration.

In the case of using the electronic apparatus **50**, the use aspect may be provided such that game software using a dice is actuated to be incorporated in the game or the electronic apparatus **50** is simply used as an eye number determination for a dice/display apparatus. When a player starts to play a game by mounting the cassette ROM **71** or by setting the CD/DVD for games to the CD/DVD drive **72**, the progress of the game is displayed from point to point. The game advances by operating the game controller **62** for the game. And Voices in the game are outputted through the audio amplifier **64** from the speaker **66**.

In a case a game requires a dice, a message is displayed on the display **65** in requiring the dice (or voices are outputted) . Accordingly when a player throws dice into the box 11 and rolls them, the eye number is read by the dice eye number determination apparatus **10**. The read contents are processed by the dice eye number determination section **60** as described above, and the determination information is sent to the main body section **61**. The main body section **61** displays the eye number on the display **65** through display controller **63.** The main body section **61** advances the game using the eye number. It is noted that the eye number of the dice can be automatically reflected in a game or can be manually inputted based upon a player's judgment.

On the other hand, in the case of using only functions of the dice eye number determination section **60**, the eye number determination result is processed independently of the game. Namely the main body section **61** executes only the processing to display the eye number determination result by the dice eye number determination section **60.**

As explained above, incorporation of the dice eye number determination section **60** into the electronic apparatus serving mainly functions as the game machine allows the eye number result of the dice to be reflected during game-playing, thereby to shorten a waiting time for a game.

The electronic apparatus **50** may be equipped with a function connected to an internet (not shown in **FIG. 21**). Provision of this function allows a player to enjoy a game through an internet without use of a cassette ROM, CD software, DVD software, and the like, and in addition, game software can be downloaded from an internet.

In the above-mentioned preferred embodiments, the eye number determination is performed in order of "**1" ,** "**6**", "**5**", "**4**", "3", and "2". However, in a case only one dice is used, the determination of the eye number "**1**" is not necessarily performed first. And the reason why the determination is performed in order from the large number to the small number ("6" .... "2") is that the processing for the small number of eyes is easier by determining the larger eye numbers at first, thereby to shorten the entire processing time. However, random order may be performed.

And in the preferred embodiments, the dice **14, 15** are formed in a square shape, but may be in a polygonal shape. In a case the dice is formed in a polygonal shape, the number of the eyes, in addition of "**1" - "6**", may include "**7**" or more. In this case, corresponding sections in the processing shown in **FIG. 6, FIG. 7, FIG. 9, FIG. 12, FIG. 16**, and **FIG. 20** may be adopted and the processing program may be timely changed in accordance with the number of the eyes.

Further, the present invention can be applied to a dice with an eye in the shape of not only a point but also a diamond, a quadrangle or the like. The color of the eye is generally black in addition of red, but other colors may be used.

The box **11** is formed in a square, but may be in another shape, for example, a cylindrical shape, or an oval shape. Further, a shape of the component corresponding to the box is not limited to a box shape and in particular, in **FIG. 3**, the image-shooting section may be formed by mounting a pole to a stand having a base of an L-letter shape or a reverse L-shape.

If the present invention is applied to a commercial product for schoolers, an appearance of the box may be imitated by a doll, an animal, a vehicle, a building or the like to establish a space at a part of the box for rolling a dice.

In **FIG. 1**, the reset switch **13** is disposed in the box **11**, but may be disposed in the main body side housing an electronic circuit therein. And if the program to actuate the reset at a certain cycle is incorporated in a ROM **4**, the reset switch **13** can be omitted.

Further, if the dice **14, 15** are disposed in the box **11** and the box **11** is upheld/shaken with the dice remained inside the box 11, as well as the upholding of the box **11** is detected by a sensor, the reset switch **13** can also be omitted.

And in a case the eye of the eye number "**1**" is not red and is not the black eye of a large size, it is difficult to determine the eye number "**1**". Accordingly, if a stick seal of a red eye corresponding to the eye "**1**" or a stick seal where a large black eye is printed is enclosed/sold in selling a dice eye number determination apparatus, the above problem is solved.

**Claims**

1. A die eye number determination method, comprising the steps of:

providing a plurality of dice (14, 15), each die having at least six faces and describing from one eye to at least six eyes on each of at least the six faces of the die;

capturing an image of one of the six faces being at least one of an upper face or a lower face of the plurality of dice to generate an image signal; and

determining an eye number of each die (14, 15) based upon the image signal on a condition of at least one of a feature of the eye(s) on the captured face, a number, and a location relation of the eye(s) in a predetermined area of the captured face; **characterised by**

determining two eyes in the captured image that have the longest distance therebetween as the eyes that are positioned at the outermost ends in the captured image;

executing processing of determining an eye number by setting one of the eyes positioned at the outermost ends of the captured image as an unprocessed end eye; and

repeating the processing of determining the eye number by setting an eye positioned close to the unprocessed end eye as a next unprocessed end eye in order, until all eyes in the captured image are processed; whereby the processing of determining an eye number determines first (S101) if the unprocessed end eye has a feature corresponding to a number "1";

thereafter if the unprocessed end eye does not have the feature of the eye corresponding to the number "1", it is determined whether or not the unprocessed end eye has the feature of the eyes corresponding to a number "6" based on a clearance between the unprocessed end eye with other eyes and subsequently, in order, to a feature of a smaller number of eyes.

2. The die eye number determination method according to claim 1, wherein:

the feature of the eye when the unprocessed end eye has a feature corresponding to a number "1" is that a color of the eye is a color other than colors of the other eyes and that the eye is larger in size than the other eyes.

3. The die eye number determination method according to claim 1, wherein:

the feature of the eyes corresponding to the number "6" is admitted when an eye closest to the unprocessed end eye is a central eye of three eyes of a pattern "6", in which two rows of three eyes are positioned in parallel, a distance between the two rows is shorter in length than a length of one of the rows, and when a size of a formed pattern "6" is not larger than a size of an actual pattern "6".

4. The die eye number determination method according to claim 1, wherein:

the feature of the eyes corresponding to the number "5" is admitted when the unprocessed end eye is any one of four eyes other than a central eye of a pattern "5" in which five eyes are located to form a cross, three eyes exist in one row of the cross, and four eyes are located at an equal distance away from the central eye that is closest to the unprocessed end eye, and a size of a formed pattern "5" is not larger than a size of an actual pattern "5".

5. The die eye number determination method according to claim 1, wherein:

the feature of the eyes corresponding to the number "4" is admitted when the unprocessed end eye and another three eyes form a pattern "4" in which two sets of two eyes exist, and are located in two parallel rows, and each eye is located at an equal distance from the two eyes closest to the each eye and a size of a formed pattern "4" in not larger than a size of an actual pattern "4".

6. The die eye number determination method according to claim 1, wherein:

the feature of the eyes corresponding to the number "3" is admitted when the unprocessed end eye and another two eyes form a pattern "3" in which three eyes are located in a linear line and two eyes are located at an equal distance from the central eye of the three eyes, and a size of a formed pattern "3" in not larger than a size of an actual pattern "3".

7. The die eye number determination method according to claim 1, wherein:

the feature of the eyes corresponding to the number "2" is admitted when the unprocessed end eye and another two eyes form a pattern "2" in which two eyes are located within a predetermined distance, and not in two rows and not in parallel, and a size of a formed pattern "2" in not larger than a size of an actual pattern "2".

8. A die eye number determination apparatus (10), comprising:

an image-capturing section (1) to capture one or a plurality of eyes described on an upper face or a lower face on a plurality of dice (14, 15), for outputting an image information;
a vessel (11), wherein:

a space for rolling the at least the one die is formed and the image-capturing section (1) is located in a lower part or an upper part thereof;
a determination section (3) arranged to determine an eye number based upon the image information by the image-capturing section on a condition of at least one of a feature of the eye(s) on the captured face, a number, and a location relation of the eye(s) in a predetermined area of the captured face; and
an output section arranged to display visually or by sound a determination result of the determination section as a numerical value or output the determination result as die information of an electronic game; and **characterised in that** the determination section (3) is configured to:

determine two eyes in the captured image that have the longest distance therebetween as the eyes that are positioned at the outermost ends in the captured image;
execute processing of determining an eye number by setting one of the eyes positioned at the outermost ends of the captured image as an unprocessed end eye; and
repeat the processing of determining the eye number by setting an eye positioned close to the unprocessed end eye as a next unprocessed end eye in order, until all eyes in the captured image are processed; whereby the step of determining an eye number is to:

determine first if the unprocessed end eye has a feature corresponding to a number "1";
thereafter the determination section determines when the unprocessed end eye does not have the feature of the eye corresponding to the number "1", whether or not the unprocessed end eye has the feature of the eyes corresponding to a number "6" based on a clearance between the unprocessed end eye with the other eyes and subsequently, in order, to a feature of a smaller number of eyes.

9. The die eye determination apparatus (10) according to claim 8, wherein:

the vessel (11) comprises a transparent board (12) horizontally disposed at a bottom section of the space; and
the image-capturing section (1) image captures the lower face of each die (14, 15) by setting substantially an entire area of the transparent board as the field of view and a focused range, the image-capturing section comprising:

an image-capturing element securely installed on the vessel (11);
a camera housing the image-capturing element therein; and
an optical scanning system that optically or mechanically scans/image-captures the lower face of the dice by a line sensor integral with an illumination lamp located under the transparent board.

10. The die eye number determination apparatus (10) according to claim 9, wherein:

the image-capturing section (1) comprises:

an image-capturing element arranged to image-capture the upper face of each die (14, 15) by setting a space where the die is rolled as the field of view and the focused range, or a camera housing (42) the image-shooting element therein; and
a stand section (44) located such that it does not interrupt rolling of dice (14, 15) when the dice are rolled in the vessel (11), and configured to hold the image-capturing section or the camera at a predetermined height.

**Patentansprüche**

1. Verfahren zur Ermittlung der Punktezahl eines Würfels, das die Schritte aufweist:

Bereitstellen einer Vielzahl von Würfeln (14, 15), wobei jeder Würfel zumindest sechs Flächen aufweist und Charakterisieren eines Punktes bis zu zumindest sechs Punkten auf jeder der zumindest sechs Flächen des Würfels;

Aufnehmen eines Bildes von einer der sechs Flächen, welche zumindest eine einer oberen Fläche oder einer unteren Fläche der Vielzahl von Würfeln ist, um ein Bildsignal zu erzeugen; und

Ermitteln einer Punktezahl eines jeden Würfels (14, 15) auf Grundlage des Bildsignals eines Zustands von zumindest einem Merkmal der Punkte auf der aufgenommenen Fläche, einer Zahl, und eines Lageverhältnisses der Punkte in einem vorbestimmten Bereich der aufgenommenen Fläche; **gekennzeichnet durch**

das Ermitteln von zwei Punkten in dem aufgenommenen Bild, welche den größten Abstand zwischen sich aufweisen, den Punkten entsprechend, welche sich an den äußersten Enden in dem aufgenommenen Bild befinden;

Durchführen der Verarbeitung des Ermittelns einer Punktezahl **durch** Festsetzen eines der an den äußersten Enden des aufgenommenen Bildes angeordneten Punktes als einen unverarbeiteten Endpunkt; und

Wiederholen der Verarbeitung des Ermittelns der Punktezahl **durch** Festsetzen eines Punktes, welcher nahe bei dem unverarbeiteten Endpunkt angeordnet ist, als einen nächsten unverarbeiteten Endpunkt, der Reihe nach, bis alle Punkte auf dem aufgenommenen Bild verarbeitet sind; wobei

das Verarbeiten des Ermittelns einer Punktezahl zunächst (S101) bestimmt, falls der unverarbeitete Endpunkt ein der einer Zahl "1" entsprechendes Merkmal aufweist;

woraufhin ermittelt wird, falls der unverarbeitete Endpunkt nicht das der Zahl "1" entsprechende Merkmal des Punktes aufweist, ob der unverarbeitete Endpunkt das der Zahl "6" entsprechende Merkmal der Punkte aufweist, oder nicht, auf Grundlage einer Lücke zwischen dem unverarbeiteten Endpunkt und anderen Punkten und im folgenden der Reihe nach, bezogen auf ein Merkmal einer kleineren Zahl von Punkten.

2. Verfahren zur Ermittlung der Punktezahl eines Würfels nach Anspruch 1, bei dem:

das Merkmal des Punktes, wenn der unverarbeitete Endpunkt ein der Zahl "1" entsprechendes Merkmal aufweist, ist, daß eine Farbe des Punktes eine von den Farben der anderen Punkte verschiedene Farbe ist und daß der Punkt in seiner Abmessung größer als die anderen Punkte ist.

3. Verfahren zur Ermittlung der Punktezahl eines Würfels nach Anspruch 1, bei dem:

das Merkmal der Punkte, welches der Zahl "6" entspricht, zugelassen wird, wenn ein dem unverarbeiteten Endpunkt nächster Punkt ein von drei Punkten zentraler Punkt in einem Muster "6" ist, in welchem zwei Reihen von drei Punkten parallel angeordnet sind, ein Abstand zwischen den zwei Reihen in der Länge kürzer als eine Länge von einer der Reihen ist, und wenn eine Abmessung eines gebildeten Musters "6" nicht größer als eine Abmessung eines tatsächlichen Musters "6" ist.

4. Verfahren zur Ermittlung der Punktezahl eines Würfels nach Anspruch 1, bei dem:

das Merkmal der Punkte, welches der Zahl "5" entspricht, zugelassen wird, wenn der unverarbeitete Endpunkt irgendeiner von vier von einem mittleren Punkt verschiedenen Punkten eines Musters "5" ist, in welchem fünf Punkte in Form eines Kreuzes angeordnet sind, drei Punkte in einer Reihe des Kreuzes vorliegen und vier Punkte mit gleichem Abstand entfernt von dem zentralen Punkt, welcher am dichtesten zu dem unverarbeiteten Endpunkt gelegen ist, angeordnet sind, und wobei eine Abmessung eines gebildeten Musters "5" nicht größer als eine Abmessung eines tatsächlichen Musters (5) ist.

5. Verfahren zur Ermittlung der Punktezahl eines Würfels nach Anspruch 1, bei dem:

das Merkmal der Punkte, welches der Zahl "4" entspricht, zugelassen wird, wenn der unverarbeitete Endpunkt und weitere drei Punkte ein Muster "4" bilden, in welchem zwei Sets von zwei Punkten vorliegen und in zwei parallelen Reihen angeordnet sind, und wobei jeder Punkt mit gleichem Abstand zu den zwei Punkten, welche dem Endpunkt am nächsten sind, angeordnet ist und eine Abmessung eines gebildeten Musters "4" nicht größer als eine Abmessung eines tatsächlichen Musters "4" ist.

6.  Verfahren zur Ermittlung der Punktezahl eines Würfels nach Anspruch 1, bei dem:

    das Merkmal der Punkte, welches der Zahl "3" entspricht, zugelassen wird, wenn der unverarbeitete Endpunkt und zwei weitere Punkte ein Muster "3" bilden, in welchem drei Punkte in einer linearen Reihe angeordnet sind und zwei Punkte mit gleichem Abstand zu dem zentralen Punkt der drei Punkte angeordnet sind, und wobei eine Abmessung eines gebildeten Musters "3" nicht größer als eine Abmessung eines tatsächlichen Musters "3" ist.

7.  Verfahren zur Ermittlung der Punktezahl eines Würfels nach Anspruch 1, bei dem:

    das Merkmal der Punkte, welches der Zahl "2" entspricht, zugelassen wird, wenn der unverarbeitete Endpunkt und zwei weitere Punkte ein Muster "2" bilden, in welchem zwei Punkte in einem vorbestimmten Abstand angeordnet sind, sowohl nicht in zwei Reihen als auch nicht parallel, und eine Abmessung eines gebildeten Musters "2" nicht größer als eine Abmessung eines tatsächlichen Musters "2" ist.

8.  Vorrichtung zur Ermittlung der Punktezahl eines Würfels (10), die aufweist:

    einen Bildaufnahmeabschnitt (1), um einen oder eine Vielzahl von Punkten, welche auf einer oberen oder einer unteren Fläche auf einer Vielzahl von Würfeln (14, 15) dargestellt sind, aufzunehmen, um eine Bildinformation auszugeben;
    einen Behälter (11), bei dem:

        ein Freiraum zum Würfeln des zumindest einen Würfels ausgebildet ist und wobei der Bildaufnahmeabschnitt (1) in einem unteren Teil oder einem oberen Teil davon angeordnet ist;
        ein Ermittlungsabschnitt (3) darauf ausgerichtet ist, eine Punktezahl auf Grundlage der Bildinformation des Bildaufnahmeabschnitts über einen Zustand zumindest eines Merkmals der Punkte auf der aufgenommenen Fläche, eine Zahl, und ein Lageverhältnis der Punkte in einem vorbestimmten Bereich der aufgenommenen Fläche zu bestimmen; und
        ein Ausgabeabschnitt darauf ausgerichtet ist, ein Ermittlungsergebnis des Ermittlungsabschnitts als einen numerischen Wert visuell oder mittels Geräusch anzuzeigen, oder, um das Ermittlungsergebnis als Würfelinformation eines elektronischen Spiels auszugeben; und **dadurch gekennzeichnet, daß** der Ermittlungsabschnitt (3) ausgelegt ist, um:

    zwei Punkte in dem aufgenommenen Bild zu ermitteln, welche den größten Abstand voneinander aufweisen, als diejenigen Punkte, welche an den äußersten Enden in dem aufgenommenen Bild angeordnet sind;
    die Verarbeitung der Ermittlung einer Punktezahl auszuführen, indem einer der Punkte, welcher an den äußersten Enden des aufgenommenen Bildes angeordnet ist, als ein unverarbeiteter Endpunkt festlegt wird; und
    die Verarbeitung der Ermittlung der Punktezahl zu wiederholen, indem ein Punkt, welcher dicht bei dem unverarbeiteten Endpunkt gelegen ist, als ein nächster unverarbeiteter Endpunkt festgesetzt wird, der Reihe nach, bis alle Punkte in dem aufgenommenen Bild verarbeitet sind; wobei der Schritt des Ermittelns einer Punktezahl aufweist:

        Bestimme zunächst, ob der unverarbeitete Endpunkt ein Merkmal, welches der Zahl "1" entspricht, aufweist; woraufhin der Ermittlungsabschnitt ermittelt, falls der unverarbeitete Endpunkt nicht das Merkmal des Punktes, welcher der Zahl "1" entspricht aufweist, ob der unverarbeitete Endpunkt das Merkmal des Punktes, welcher der Zahl "6" entspricht aufweist, oder nicht, auf Grundlage einer Lücke zwischen dem unverarbeiteten Endpunkt und den anderen Punkten und im folgenden, der Reihe nach, bezogen auf ein Merkmal einer kleineren Zahl von Punkten.

9.  Vorrichtung zur Ermittlung der Punktezahl eines Würfels (2) nach Anspruch 8, bei der:

    der Behälter (11) eine transparente Platte (12) aufweist, welche horizontal in einem unteren Bereich des Raumes angeordnet ist; und
    der Bildaufnahmeabschnitt (1) Bilder der unteren Flächen eines jeden Würfels (14, 15) aufnimmt, indem im wesentlichen ein gesamter Bereich der transparenten Platte als Bildfeld und als fokussierter Bereich festgelegt sind, wobei der Bildaufnahmeabschnitt aufweist:

        eine Bildaufnahmeeinheit, welche fest an den Behälter (11) angebracht ist;

eine Kamera, welche die Bildaufnahmeeinheit in sich aufnimmt; und

ein optisches Abtastsystem, das optisch oder mechanisch die untere Fläche des Würfels mit Hilfe eines Liniensensorintegrals mit einer Lampe zur Ausleuchtung, welche unter der transparenten Platte angeordnet ist, abtastet/abbildet.

**10.** Vorrichtung zur Ermittlung der Punktezahl eines Würfels nach Anspruch 9, bei der:

der Bildaufnahmeabschnitt (1) aufweist:

eine Bildaufnahmeeinheit, welche darauf ausgerichtet ist, die obere Fläche eines jeden Würfels (14, 15) abzubilden, indem ein Raum, in dem mit dem Würfel gewürfelt wird, als Sichtfeld und der fokussierte Bereich festgelegt wird, oder eine Kamera, welche die Bildaufnahmeeinheit in sich aufnimmt; und

einen Ständer (44), derart angeordnet, daß er nicht das Rollen des Würfels (14, 15) stört, wenn der Würfel in dem Behälter (11) gewürfelt wird, und dazu ausgelegt, die Bildaufnahmeeinheit oder die Kamera auf einer vorbestimmten Höhe zu halten.

## Revendications

**1.** Procédé de détermination du nombre de points de dés, comprenant les étapes consistant à :

fournir une pluralité de dés (14, 15), chaque dé ayant au moins six faces et présentant de un point à au moins six points sur chacune des au moins six faces du dé,

acquérir une image de l'une des six faces qui est au moins l'une d'une face supérieure ou d'une face inférieure de la pluralité de dés pour générer un signal d'image, et

déterminer un nombre de points de chaque dé (14, 15) sur la base du signal d'image à partir d'une condition parmi au moins l'un d'une caractéristique du ou des points sur la face acquise, d'un nombre et d'une relation de localisation du ou des points dans une zone prédéterminée de la face acquise, **caractérisé par** les étapes consistant à

déterminer deux points dans l'image acquise qui ont la distance la plus grande entre eux comme étant les points qui sont positionnés aux extrémités les plus à l'extérieur dans l'image acquise,

exécuter un traitement de détermination d'un nombre de points en établissant l'un des points positionnés au niveau des extrémités les plus à l'extérieur de l'image acquise en tant que point d'extrémité non traité, et

répéter le traitement de détermination du nombre de points en établissant un point positionné près du point d'extrémité non traité en tant que point d'extrémité non traité suivant dans l'ordre, jusqu'à ce que tous les points de l'image acquise soient traités, grâce à quoi

le traitement de détermination du nombre de points détermine tout d'abord (S101) si le point d'extrémité non traité a une caractéristique correspondant au nombre "1",

après cela, si le point d'extrémité non traité n'a pas la caractéristique du point correspondant au nombre "1", il est déterminé si le point d'extrémité non traité a ou non la caractéristique des points correspondant à un nombre "6" sur la base d'un espace entre le point d'extrémité non traité et les autres points et ensuite, dans l'ordre, une caractéristique d'un nombre de points inférieur.

**2.** Procédé de détermination de nombre de points de dés selon la revendication 1, dans lequel :

la caractéristique du point lorsque le point d'extrémité non traité a une caractéristique correspondant à un nombre "1" est qu'une couleur du point est une couleur autre que les couleurs des autres points et que le point est d'une taille supérieure à celle des autres points.

**3.** Procédé de détermination de nombre de points de dés selon la revendication 1, dans lequel :

la caractéristique des points correspondant au nombre "6" est admise lorsqu'un point le plus proche du point d'extrémité non traité est un point central parmi trois points d'un motif "6", dans lequel deux rangées de trois points sont positionnées en parallèle, une distance entre les deux rangées a une valeur plus courte que la longueur de l'une des rangées, et lorsque la taille d'un motif formé "6" n'est pas supérieure à une taille d'un motif réel "6".

**4.** Procédé de détermination de nombre de points de dés selon la revendication 1, dans lequel :

la caractéristique des points correspondant au nombre "5" est admise lorsque le point d'extrémité non traité est l'un quelconque des quatre points autres qu'un point central d'un motif "5" dans lequel cinq points sont situés pour former une croix, trois points existent dans une rangée de la croix et quatre points sont situés à une distance identique par rapport au point central qui est le plus proche du point d'extrémité non traité, et la taille d'un motif formé "5" n'est pas supérieure à la taille d'un motif réel "5".

5. Procédé de détermination de nombre de points de dés selon la revendication 1, dans lequel :

la caractéristique des points correspondant au nombre "4" est admise lorsque le point d'extrémité non traité et trois autres points forment un motif "4" dans lequel deux ensembles de deux points existent et sont situés dans deux rangées parallèles, et chaque point est situé à une distance identique par rapport aux deux points les plus proches de chaque point et la taille d'un motif formé "4" n'est pas supérieure à la taille d'un motif réel "4".

6. Procédé de détermination de nombre de points de dés selon la revendication 1, dans lequel :

la caractéristique des points correspondant au nombre "3" est admise lorsque le point d'extrémité non traité et deux autres points forment un motif "3" dans lequel trois points sont situés dans une ligne linéaire et deux points sont situés à une distance identique par rapport au point central parmi les trois points, et la taille d'un motif formé "3" n'est pas supérieure à la taille d'un motif réel "3".

7. Procédé de détermination de nombre de points de dés selon la revendication 1, dans lequel :

la caractéristique des points correspondant au nombre "2" est admise lorsque le point d'extrémité non traité et deux autres points forment un motif "2" dans lequel deux points sont situés à moins d'une distance prédéterminée et ne sont pas dans deux rangées et ne sont pas en parallèle, et la taille du motif formé "2" n'est pas supérieure à la taille d'un motif réel "2".

8. Dispositif de détermination de nombre de points de dés (10), comprenant :

une section d'acquisition d'image (1) destinée à acquérir une ou une pluralité de points présents sur une face supérieure ou une face inférieure sur une pluralité de dés (14, 15), destinée à fournir en sortie des informations d'image,
un récipient (11), où :

un espace pour faire rouler le au moins un dé est formé et la section d'acquisition d'image (1) est située dans une partie inférieure ou une partie supérieure de celui-ci,
une section de détermination (3) conçue pour déterminer un nombre de points sur la base des informations d'image par la section d'acquisition d'image à une condition parmi au moins l'une d'une caractéristique du ou des points sur la face acquise, d'un nombre et d'une relation de localisation du ou des points dans une zone prédéterminée de la face acquise, et
une section de sortie conçue pour afficher visuellement ou de manière sonore un résultat de détermination de la section de détermination en tant que valeur numérique ou fournir en sortie du résultat de détermination en tant qu'informations de dés d'un jeu électronique, et **caractérisé en ce que** la section de détermination (3) est configurée pour :

déterminer deux points dans l'image acquise qui ont la distance la plus longue entre eux en tant que points qui sont positionnés au niveau des extrémités les plus à l'extérieur dans l'image acquise,
exécuter un traitement de détermination d'un nombre de points en établissant l'un des points positionnés au niveau des extrémités les plus à l'extérieur de l'image acquise en tant que point d'extrémité non traité, et
répéter le traitement de détermination du nombre de points en établissant un point positionné près du point d'extrémité non traité en tant que point d'extrémité non traité suivant dans l'ordre, jusqu'à ce que tous les points dans l'image acquise soient traités, grâce à quoi l'étape de détermination d'un nombre de points consiste à :

déterminer tout d'abord si le point d'extrémité non traité a une caractéristique correspondant à un nombre "1",
après cela, la section de détermination détermine, lorsque le point d'extrémité non traité n'a pas la caractéristique du point correspondant au nombre "1", si le point d'extrémité non traité a ou non la caractéristique des points correspondant à un nombre "6" sur la base d'un espace entre le point d'extrémité non traité et les autres points et ensuite, dans l'ordre, à une caractéristique d'un nombre plus petit de points.

**9.** Dispositif de détermination de points de dés (10) selon la revendication 8, dans lequel :

le récipient (11) comprend une plaque transparente (12) disposée de manière horizontale au niveau d'une section inférieure de l'espace, et

la section d'acquisition d'image (1) effectue une acquisition d'image de la face inférieure de chaque dé (14, 15) en établissant globalement une surface entière de la plaque transparente en tant que champ de vision et une plage de mise au point, la section d'acquisition d'image comprenant :

un élément d'acquisition d'image installé de manière fixe sur le récipient (11),

un appareil de prise de vues recevant l'élément d'acquisition d'image dans celui-ci, et

un système de balayage optique qui balaie optiquement ou mécaniquement/effectue une acquisition d'image de la face inférieure du dé par le biais d'un capteur en ligne intégré à une lampe d'illumination située sous la plaque transparente.

**10.** Dispositif de détermination de nombre de points de dés (10) selon la revendication 9, dans lequel :

la section d'acquisition d'image (1) comprend :

un élément d'acquisition d'image conçu pour effectuer une acquisition d'image de la face supérieure de chaque dé (14, 15) en établissant un espace où le dé roule en tant que champ de vision et la plage de mise au point, ou un appareil de prise de vues recevant (42) l'élément d'acquisition d'image dans celui-ci, et

une section de support (44) située de sorte qu'elle n'interrompe pas le roulement des dés (14, 15) lorsque les dés roulent dans le récipient (11), et configurée pour maintenir la section d'acquisition d'image ou l'appareil de prise de vues à une hauteur prédéterminée.

FIG. 1

10 EYE NUMBER DETERMINATION APPARATUS FOR A DICE

7 DISPLAY SECTION

6 DISPLAY CONTROL SECTION

9 SPEAKER

8 AUDIO PROCESSING SECTION

9 ROM

3 CPU

5 RAM

11 BOX

12 TRANSPARENT BOARD

13 RESET SWITCH

14 DICE

15 DICE

2 IMAGE PROCESSING SECTION

1 IMAGE-SHOOTING SECTION

# FIG.2

**14 DICE**

**20 IMAGE-SHOOTING SECTION**

**30 READING SECTION**

**25a BELT**

**22 LAMP**

**23 LENS**

**26a PULLEY**

**24 CIS**

**27 SHAFT**

**25b BELT**

**26b PULLEY**

**21 BASE**

**28 ROTATION SHAFT**

**IMAGE PROCESSING SECTION** — 2

**IMAGE SIGNAL**

**29 MOTOR**

**CPU** — 3

**MOTOR DRIVE SECTION** — 31

# FIG.3

40
IMAGE-SHOOTING
SECTION

44b
HOLDER

44
STAND

44a
POLE

42
CAMERA
SECTION

43
SUPPORT
SECTION

41
BOX

45
RESET
SWITCH

# FIG.4

# FIG.5

「1」

RED COLOR

「2」

CLEARANCE IS DIFFERENT
FROM THAT OF "3"

「3」

EQUAL
CLEARANCE EYES ARE LINED

「4」

— TWO EYES

TWO ROWS

PARALLEL

FOUR EYES ARE LOCATED BY AN
EQUAL CLEARANCE FROM EACH OTHER

「5」

· CROSS

· FOUR EYES ARE LOCATED
ON A CIRCUMFERENCE OF A RADIUS

「6」

— THREE EYES

· TWO ROWS AND PARALLEL

# *FIG.6*

START

S201 — ONLY ONE EYE ? — N → TO S102

Y

S202 — RED OR BLACK ? — N →

Y

S203 — DETERMINE THAT THE EYE NUMBER IS ONE

TO S111

TO S102

# FIG.7

DETERMINATION OF "1" —— S101

S301
THREE EYES ? —— N

Y

S302
ARE
THERE TWO ROWS
OF THREE EYES
? —— N

Y

S303
DISTANCE
BETWEEN EACH OF TWO SETS OF
THREE EYES IS LONGER THAN DISTANCE
OF ONE SET OF THREE
EYES —— N

Y

S304
PARALLEL ? —— N

Y

S305
DETERMINE THAT THE EYE NUMBER IS SIX

TO S111

TO S103

*FIG.8A*

81
DICE

82
EYE

d1

d2

g

w

*FIG.8B*

81
DICE

a

b

c

d

e

f

*FIG.8C*

84

83
DICE

*FIG.8D*

85
DICE

86

# *FIG.9*

DETERMINATION OF "6" ——— S102

S401

THREE EYES ? —— N

Y

S402

FOUR EYES ARE
IN AN EQUAL DISTANCE
AWAY FROM A CENTER
? —— N

Y

S403

CROSS ? —— N

Y

S404

DETERMINE THAT THE EYE NUMBER IS FIVE

TO S111

TO S104

# FIG.10

# FIG.11

# FIG.12

DETERMINATION OF "5" ——— S103

S501

TWO EYES ? ——N——→

Y

S502

ARE THERE TWO ROWS OF TWO EYES ? ——N——→

Y

S503

PARALLEL ? ——N——→

Y

S504

FOUR EYES ARE IN AN EQUAL DISTANCE ? ——N——→

Y

S505

DETERMINE THAT THE EYE NUMBER IS FOUR

TO S111                    TO S105

# *FIG.13*

# *FIG.14*

# *FIG.15*

# FIG.16

DETERMINATION OF "4" — S104

S601

THREE EYES ? — N

Y

S602

TWO EYES ARE
IN AN EQUAL DISTANCE
AWAY FROM A
CENTER? — N

Y

S603

THREE EYES
ARE LINED ? — N

Y

S604

DETERMINE THAT THE EYE NUMBER IS
THREE

TO S111

TO S106

# FIG. 17

171
DICE

# FIG. 18

181
DICE

182

# FIG. 19

191
DICE

194
FALSE
EYE
NUMBER

192

195

193

FIG.20

DETERMINATION OF "3" — S105

S701

TWO EYES ? —N→

Y

S702

ARE THERE TWO ROWS OF TWO EYES ? —Y→

N

S703

PARALLEL ? —N→ DETERMINE THAT THE EYE NUMBER IS TWO    S704

Y

TO S111

TO S107

EP 1 538 576 B1

## FIG.21

EP 1 538 576 B1

50
ELECTRONIC
APPARATUS

65
DISPLAY

63
DISPLAY
CONTROLLER

61
MAIN BODY

1

IMAGE-SHOOTING
SECTION

60
EYE NUMBER
DETERMINATION
SECTION FOR
A DICE

71 — CASSETTE ROM

72 — CD/DVD
DRIVE

62
CONTROLLER

64

66
SPEAKER

AUDIO
AMPLIFIER

**EP 1 538 576 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003406539 A

- JP 8215423 A

**Non-patent literature cited in the description**

- **B. CORREIA ; J. A. SILVA et al.** Automated detection and classification of dice. *MACHINE VISION APPLICATIONS IN INDUSTRIAL INSPECTION III 8-9 FEB,* March 1995, vol. 2423, 196-202